# EUROPEAN PATENT SPECIFICATION

(11) **EP 2 365 449 B1**
(45) Date of publication and mention of the grant of the patent: **25.02.2015**
(21) Application number: 11004532.5
(22) Date of filing: 28.07.2004
(51) Int. Cl.: G06F 17/30, H04L 29/06

(54) **Embedding a session description message in a real-time control protocol (RTCP) message**
Einbettung einer Sitzungsbeschreibungsnachricht in eine Echtzeit-Steuerungsprotokoll-Nachricht
Intégration d'un message de description de session dans un message de protocole de contrôle en temps réel (RTCP)

(30) Priority: 24.10.2003 US 693430; 30.04.2004 US 836973
(43) Date of publication of application: 14.09.2011
(62) Divisional of application: 04779232.0
(73) Proprietor: Microsoft Corporation, Redmond, WA 98052-6399 (US)
(72) Inventor: Klemets, Anders E., Redmond WA 98052-6399 (US); Oliveira, Eduardo P., Redmond WA 98052-6399 (US); Alkove, James M., Redmond WA 98052-6399 (US)
(74) Representative: Grünecker, Kinkeldey, Stockmair & Schwanhäusser

(56) References cited:
- EP-A1- 1 337 061
- EP-A2- 1 280 306
- FR-A1- 2 827 451
- SCHULZRINNE COLUMBIA UNIVERSITY S CASNER PACKET DESIGN R FREDERICK BLUE COAT SYSTEMS INC V JACOBSON PACKET DESIGN H: "RTP: A Transport Protocol for Real-Time Applications; rfc3550.txt", 1 July 2003 (2003-07-01), IETF STANDARD, INTERNET ENGINEERING TASK FORCE, IETF, CH, XP015009332, ISSN: 0000-0003 * Chapter 6.5 *
- CASNER PACKET DESIGN S: "Session Description Protocol (SDP) Bandwidth Modifiers for RTP Control Protocol (RTCP) Bandwidth; rfc3556.txt", IETF STANDARD, INTERNET ENGINEERING TASK FORCE, IETF, CH, 1 July 2003 (2003-07-01), XP015009338, ISSN: 0000-0003

## Description

### TECHNICAL FIELD

This invention relates to streaming media and data transfers, and particularly to embedding a session description message in an RTCP message.

### BACKGROUND OF THE INVENTION

Content streaming, such as the streaming of audio, video, and/or text is becoming increasingly popular. The term "streaming" is typically used to indicate that the data representing the content is provided over a network to a client computer on an as-needed basis rather than being pre-delivered in its entirety before playback. Thus, the client computer renders streaming content as it is received from a network server, rather than waiting for an entire "file" to be delivered.

The widespread availability of streaming multimedia content enables a variety of informational content that was not previously available over the Internet or other computer networks. Live content is one significant example of such content. Using streaming multimedia, audio, video, or audio/visual coverage of noteworthy events can be broadcast over the Internet as the events unfold. Similarly, television and radio stations can transmit their live content over the Internet.

The Session Description Protocol (SDP), Network Working Group Request for Comments (RFC) 2327, is a text-based format used to describe properties of a multimedia presentation, referred to as a "session", and properties of one or more media streams contained within the presentation. SDP has been developed as an application level protocol intended for describing multimedia sessions for the purposes of session announcement, session invitation, and other forms of multimedia session initiation. SDP can be used in accordance with other protocols, such as the Real-Time Streaming Protocol (RTSP) or the HyperText Transfer Protocol (HTTP), to describe and/or negotiate properties of a multimedia session used for delivery of streaming data.

However, in many situations it is difficult to get the SDP information from the network server to the client computer. For example, the network server may be streaming a series of multimedia presentations to the client computer, such as presentations listed in a play list. When the network server switches from streaming one presentation to the next, it is oftentimes difficult for the SDP information for the next presentation to be made available to the client computer. Thus, it would be beneficial to have an additional mechanism by which the SDP information can be made available to the client computer.

Content streaming may also be multicast. Conventional approaches to multicasting of streaming content typically involves providing content to be multicast to a server, which then multicasts the content over a network (i.e., without feedback from the clients receiving the streams). The server typically multicasts the content in several streams having different formats (e.g., bit rates, languages, encoding schemes etc.) Clients attached to the network can then receive the stream(s) appropriate for its resources. To allow clients to select which stream(s) to receive, one multicast approach requires that the server provide a file that provides "multicast information" that allows clients to open streams of content. Maintaining and publishing this file is typically a manual process that has a relatively high administrative cost. Further, if not properly maintained and published, clients may encounter problems, which can lead to customer dissatisfaction. Another problem with this approach is that clients must keep their "multicast information" up-to-date so that they can properly access the content. This problem is exacerbated for clients that do not have a suitable back channel to request updates (e.g., clients with unidirectional satellite links).

EP 1 280 306 A2 relates to a system and method for providing rapid rerouting of real-time transport protocol (RTP) multi-media flows. A RTCP packet format can be used between two multi-media routers (see [0038]). RTCP packets that are of particular interest include a sender report and a receiver report. The sender report includes sender transmission information and per receiver information, while the receive report includes the per receiver information. Session statistics in a receiver report message that are of particular interest in deriving latency, jitter and dropped packets include fraction lost, cumulative lost, highest sequence number received, interarrival jitter, last session report timestamp, and/or delay since the last session report timestamp.

### SUMMARY OF THE INVENTION

It is the object of the invention to provide a system and method for embedding a session description message in a Real-Time Control Protocol (RTCP) message.

This object is solved by the subject matter of the independent claims.

Embodiments are given in the dependent claims.

Embedded within at least some of the RTCP messages sent from a media content source to a recipient is a session description message that describes the media presentation being streamed to the recipient.

In accordance with certain aspects, an RTCP message that embeds a session description message includes at least three fields. The first field contains data identifying the RTCP message as being a type that embeds a session description message. The second field contains data that is the session description message for a media presentation. The third field contains data identifying a length of the RTCP message, generated by summing the length of the first field, the length of the second field, and the length of the third field.

In accordance with other aspects, the RTCP message is created at a device, such as a server device. The session description message embedded within the RTCP message is associated with one of a plurality of pieces of media content in a play list of media content being streamed from the device to the recipient.

In accordance with other aspects, multimedia presentations are multicast using an announcement channel that includes presentation description information along with multiple channels for multiple streams of multimedia data to accommodate clients of different multimedia resources. Clients can use the announcement channel to select channel(s) appropriate for their multimedia resources.

In accordance with other aspects, the channels are created in a predetermined manner (e.g., preselected logical addresses, preselected ports of an IP address, etc.) so that clients can immediately join a channel without (or concurrently with) joining the announcement channel to reduce startup latency.

In accordance with other aspects, an acceleration channel may be created that provides blocks of data containing the current unit of the multimedia presentation along with a preselected number of previous units at a bit rate that is "faster than real-time" (i.e., at a rate that is faster than the bit-rate of the multimedia streams). This feature allows clients with suitable resources to more quickly buffer sufficient data to begin presenting the multimedia data to users. Alternatively, the acceleration channel need not be "faster than real time" so that a client may concurrently join both the acceleration channel and another channel that multicasts multimedia data so that, in effect, the client receives the multimedia data at a rate that is "faster than real-time."

### BRIEF DESCRIPTION OF THE DRAWINGS

The same numbers are used throughout the document to reference like components and/or features.
FIG. 1 illustrates an example network environment that can be used to stream media using the session description message embedded in an RTCP message as described herein.
FIG. 2 illustrates example client and server devices that can stream media content using the session description message embedded in an RTCP message as described herein.
FIG. 3 illustrates example client and server devices in a multicast environment that can stream media content using the session description message embedded in an RTCP message as described herein.
FIG. 4 illustrates example client and server devices in a server-side play list environment that can stream media content using the session description message embedded in an RTCP message as described herein.
FIG. 5 illustrates an example format of an RTCP message having an embedded session description message.
FIG. 6 illustrates an example session description message format.
FIG. 7 is a flowchart illustrating an example process for embedding session description messages in an RTCP message when using a play list.
FIG. 8 is a flowchart illustrating an example process for receiving session description messages in an RTCP message when using a play list.

### DETAILED DESCRIPTION OF THE PREFERRED EMBODIMENT

Embedding a session description message in a Real-Time Control Protocol (RTCP) message is discussed herein. A multimedia or single media presentation is streamed from a media content source, such as a server device, to a recipient, such as a client device, using Real-Time Transport Protocol (RTP) packets. Control information regarding the presentation being streamed is also sent from the media content source to the recipient using RTCP messages. Embedded within at least some of the RTCP messages is a session, description message that describes the presentation being streamed.

In the discussions herein, reference is made to multimedia presentations being streamed from a media content source to a recipient. The media content source can be any source of media content, an example of which is a server device. A recipient can be any recipient of media content, an example of which is a client device. Additionally, it is to be appreciated that although the discussion herein may refer to multimedia presentations being streamed, single media presentations may also be streamed in the same manner as discussed herein regarding multimedia presentations.

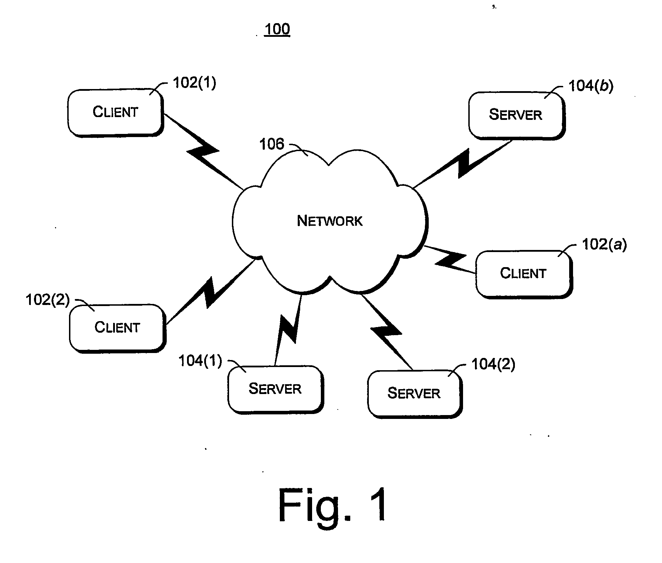

FIG. 1 illustrates an example network environment 100 that can be used to stream media using the session description message embedded in an RTCP message as described herein. In environment 100, multiple (a) client computing devices 102(1), 102(2), ..., 102(a) are coupled to multiple (b) server computing devices 104(1), 104(2), ..., 104(b) via a network 106. Network 106 is intended to represent any of a variety of conventional network topologies and types (including wired and/or wireless networks), employing any of a variety of conventional network protocols (including public and/or proprietary protocols). Network 106 may include, for example, the Internet as well as possibly at least portions of one or more local area networks (LANs).

Computing devices 102 and 104 can each be any of a variety of conventional computing devices, including desktop PCs, workstations, mainframe computers, Internet appliances, gaming consoles, handheld PCs, cellular telephones, personal digital assistants (PDAs), etc. One or more of devices 102 and 104 can be the same types of devices, or alternatively different types of devices.

Server devices 104 can make any of a variety of data available for streaming to clients 102. The term "streaming" is used to indicate that the data representing the media is provided over a network to a client device and that playback of the content can begin prior to the content being delivered in its entirety (e.g., providing the data on an as-needed basis rather than pre-delivering the data in its entirety before playback). The data may be publicly available or alternatively restricted (e.g., restricted to only certain users, available only if the appropriate fee is paid, etc.). The data may be any of a variety of one or more types of content, such as audio, video, text, animation, etc. Additionally, the data may be pre-recorded or alternatively "live" (e.g., a digital representation of a concert being captured as the concert is performed and made available for streaming shortly after capture).

A client device 102 may receive streaming media from a server 104 that stores the streaming media content as a file, or alternatively from a server 104 that receives the streaming media from some other source. For example, server 104 may receive the streaming media from another server that stores the streaming media content as a file, or may receive the streaming media from some other source (e.g., an encoder that is encoding a "live" event).

As used herein, streaming media refers to streaming one or more media streams from one device to another (e.g., from a server device 104 to a client device 102). The media streams can include any of a variety of types of content, such as one or more of audio, video, text, and so forth.

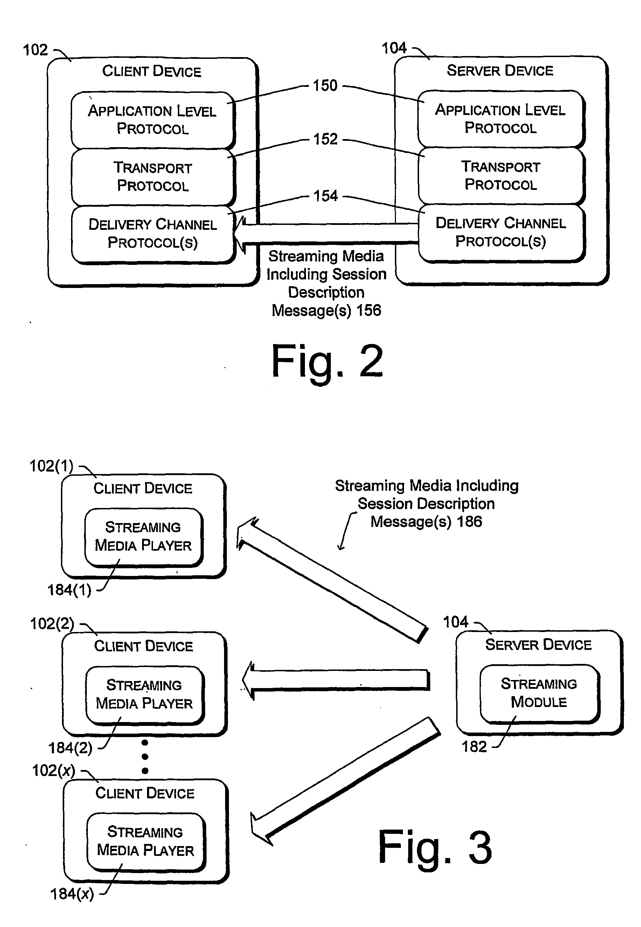

FIG. 2 illustrates example client and server devices that can stream media content using the session description message embedded in an RTCP message as described herein. Multiple different protocols are typically followed at both client device 102 and server device 104 in order to stream media content from server device 104 to client device 102. These different protocols can be responsible for different aspects of the streaming process. Although not shown in FIG. 2, one or more additional devices (e.g., firewalls, routers, gateways, bridges, etc.) may be situated between client device 102 and server device 104.

In the example of FIG. 2, an application level protocol 150, a transport protocol 152, and one or more delivery channel protocols 154 are used as part of the streaming process. Additional protocols not shown in FIG. 2 may also be employed (e.g., there may be an additional protocol(s) between application level protocol 150 and transport protocol 152). Application level protocol 150 is a protocol at the application level for control of the delivery of data with real-time properties. Application level protocol 150 provides a framework, optionally extensible, to enable controlled, on-demand delivery of real-time data, such as streaming audio and video content. Application level protocol 150 is a control protocol for initiating and directing delivery of streaming multimedia from media servers. Examples of application level protocol 150 include the Real-Time Streaming Protocol (RTSP) as described in Network Working Group Request for Comments (RFC) 2326, April 1998, and the HyperText Transport Protocol (HTTP) as described in Network Working Group Request for Comments (RFC) 1945, May 1996 or Network Working Group Request for Comments (RFC) 2068, January 1997.

Application level protocol 150 uses transport protocol 152 for the delivery of real-time data, such as streaming audio and video. Transport protocol 152 defines a packet format for media streams. Transport protocol 152 provides end-to-end network transport functions suitable for applications transmitting real-time data, such as audio, video or simulation data, over multicast or unicast network services. Examples of transport protocol 152 include the Real-Time Transport Protocol (RTP) and the Real-Time Control Protocol (RTCP) as described in Network Working Group Request for Comments (RFC) 3550, July 2003. Other versions, such as future draft or standardized versions, of RTP and RTCP may also be used. RTP does not address resource reservation and does not guarantee quality-of-service for real-time services. The data transport is augmented by a control protocol (RTCP) to allow monitoring of the data delivery in a manner scalable to large multicast networks, and to provide some control and identification functionality.

The RTCP protocol groups one or more control messages together into a unit referred to as an RTCP packet. Embedded within one or more of the RTCP packets is a control message that includes a session description message. The session description message describes properties of the multimedia presentation being streamed from server device 104 to client device 102. The streaming media from server device 104 to client device 102 thus includes the session description message.

The transport protocol 152 uses delivery channel protocol(s) 154 for the transport connections. Delivery channel protocol(s) 154 include one or more channels for transporting packets of data from server device 104 to client device 102. Each channel is typically used to send data packets for a single media stream, although in alternate embodiments a single channel may be used to send data packets for multiple media streams. Examples of delivery channel protocols 154 include Transmission Control Protocol (TCP) packets and User Datagram Protocol (UDP) packets. TCP ensures the delivery of data packets, whereas UDP does not ensure the delivery of data packets. Typically, delivery of data packets using TCP is more reliable, but also more time-consuming, than delivery of data packets using UDP.

FIG. 3 illustrates example client and server devices in a multicast environment that can stream media content using the session description message embedded in an RTCP message as described herein. In certain embodiments, the protocols 150, 152, and 154 of FIG. 2 are included in the client and server devices of FIG. 3, but have not been illustrated. Furthermore, although not shown in FIG. 3, one or more additional devices (e.g., firewalls, routers, gateways, bridges, etc.) may be situated between client device 102 and server device 104.

A streaming module 182 of server device 104 streams the same multimedia presentation to each of multiple (x) client devices 102(1), 102(2),..., 102(x). Each client device 102 has a streaming media player 184 that receives the streamed multimedia presentation and processes the received stream at the client device 102, typically playing back the multimedia presentation at the client device 102. The same data is streamed to each client device 102 at approximately the same time, allowing server device 104 to stream only one occurrence of the same multimedia presentation at a time, with the various client devices 102 listening in to this one occurrence being streamed.

The streaming media 186 includes RTCP messages having one or more session description messages embedded therein. The same session description message may be broadcast multiple times during the streaming of the multimedia presentation, thereby allowing new client devices 102 to listen in to the streaming media after streaming has begun but still receive a session description message describing the multimedia presentation. By embedding the session description messages within the RTCP messages of the streaming media 186, client devices 102 do not need to listen in to a separate stream or broadcast, potentially from a device other than server device 182, to receive the session description messages.

Co-pending Application No. 10/693,430, filed October 24, 2003, entitled "Methods and Systems for Self-Describing Multicasting of Multimedia Presentations", describes an example of such a multicasting environment.

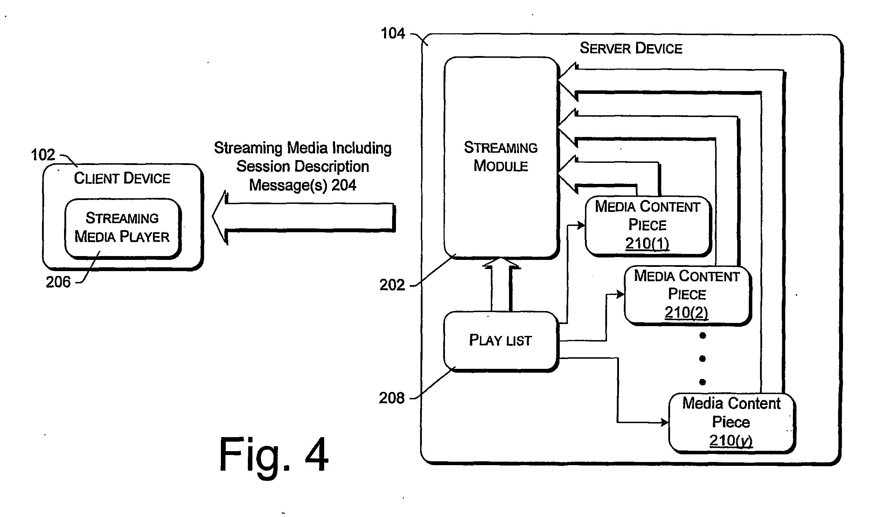

FIG. 4 illustrates example client and server devices in a server-side play list environment that can stream media content using the session description message embedded in an RTCP message as described herein. In certain embodiments, the protocols 150, 152, and 154 of FIG. 2 are included in the client and server devices of FIG. 4, but have not been illustrated. Furthermore, although not shown in FIG. 3, one or more additional devices (e.g., firewalls, routers, gateways, bridges, etc.) may be situated between client device 102 and server device 104.

A streaming module 202 of server device 104 streams a multimedia presentation as streaming media 204 to a streaming media player 206 of client device 102. Streaming media player 206 receives the streamed multimedia presentation and processes the received stream at the client device 102, typically playing back the multimedia presentation at the client device 102.

Server device 104 includes a play list 208 that identifies multiple (y) pieces of media content 210(1), 210(2),..., 210(y). In certain implementations, a play list 208 includes multiple entries, each entry identifying one of the multiple pieces of media content 210. Alternatively, play list 208 may identify a single piece of media content, although in such situations the single piece of media content could simply be referenced by itself rather than through the use of a play list. A client device 102 is able to select a single resource for playback, that resource identifying play list 208. Streaming module 202 accesses the identified play list 208, and then accesses the individual pieces of media content 210 and streams those pieces 210 to client device 102. Thus, the client device 102 is able to access a single resource, yet have multiple different pieces of media content streamed from server device 104. As the play list 208 is accessed by and referred to by server device 104 to identify the pieces of media content, rather than by client device 102, the play list 208 can also be referred to as a server-side play list.

Each piece of media content 210 includes one or more media streams. Different pieces of media content 210 can include different numbers of media streams. Each piece of media content 210 is typically a multimedia presentation. The manner in which a "piece" of content is defined can vary by implementation and based on the type of media. For example, for musical audio and/or video content each song can be a piece of content. Content may be separated into pieces along natural boundaries (e.g., different songs), or alternatively in other arbitrary manners (e.g., every five minutes of content is a piece). For stored content, different pieces of content can be stored as multiple files or alternatively as the same file.

Although illustrated as two separate drawings in FIGS. 3 and 4, it is to be appreciated that pieces of media content referenced by a server-side play list as illustrated in FIG. 4 can be multicast as illustrated in FIG. 3.

Referring to FIGS. 2, 3, and 4, at the transport level the data to be streamed form server device 104 to client device 102 is embedded in RTP packets. Control information related to the data being streamed and the RTP packets is embedded in one or more control messages within an RTCP packet.

Typically, an RTCP packet consists of several messages of different types. The first message in the RTCP packet is either a Receiver Report or a Sender Report. The second message is an SDES (Source Description) message. The SDES message contains one or more textual meta-data items. The SDES message contains a CNAME (canonical name) item. The CNAME item is a persistent transport-level identifier of the media content source and provides a mapping between the RTP synchronization source (SSRC) number and a textual string. The SSRC is a source of a stream of RTP (and RTCP) packets. The CNAME is used so that a sender or receiver that is participating in multiple RTP sessions that belong to the same presentation may use different SSRC values in each RTP session, but keep the CNAME value the same.

An additional type of message that can be included in an RTCP packet is a control message having embedded therein a session description message. The session description message describes properties of the multimedia presentation being streamed from server device 104 to client device 102. Different media formats or protocols can be used for such session description messages. An example of such a media format is the Session Description Protocol (SDP), Network Working Group Request for Comments (RFC) 2327, April 1998. In certain embodiments, the session description message discussed herein is a message in accordance with the SDP format described in RFC 2327.

Although different formats can be used to describe properties of the multimedia presentation, one or more session description messages are sent from server device 104 to client device 102 that include identifier(s) of the properties. A single session description message may be sent by server device 104 for a particular multimedia presentation, or alternatively multiple session description messages may be sent. If multiple session description messages are sent, the multiple messages may include the same information, different information, or overlapping information.

A session description message includes, for example, one or more of: an identification of various channels used to multicast the multimedia presentation; descriptions of each media stream available in the multimedia presentation (e.g., indicating the type of stream (e.g., video or audio), a bit-rate of each media stream, a language used in the stream, etc.); error correction information; security/authentication information; encryption information; or digital rights management (DRM) information; etc.

It should be noted that in certain situations a session description message can be separated or fragmented across multiple RTCP control messages. Such situations can arise, for example, when the session description message is very large. Each of these RTCP control messages is included in a different RTCP packet, and each contains a portion or fragment of the entire session description message. Client device 102, upon receiving all of the portions or fragments, can combine them together to recreate the session description message.

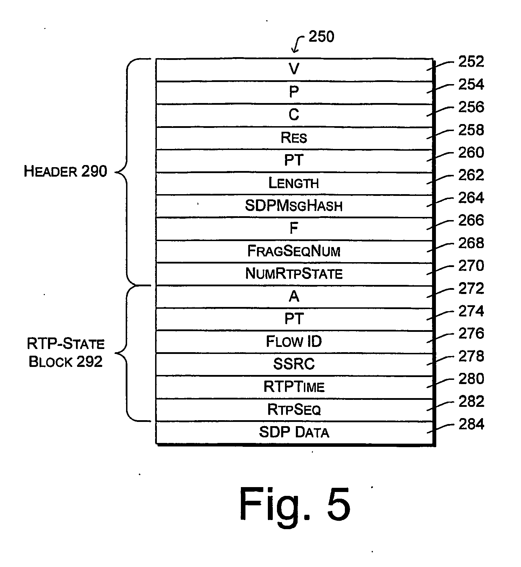

FIG. 5 illustrates an example format of an RTCP control message 250 having an embedded session description message. RTCP message 250 is discussed below as including multiple fields (also referred to as portions), each storing various data. It is to be appreciated that these fields can be arranged in different orders than the order in which they are discussed below and shown in FIG. 5. Additionally, although sizes or lengths of these fields (e.g., in bits) are discussed below, it is to be appreciated that these are only examples and the fields may alternatively larger or smaller than these example sizes or lengths. In certain embodiments, RTCP message 250 includes all of the fields shown in FIG. 5. In alternate embodiments, RTCP message 250 includes fewer than all of the fields shown in FIG. 5, or may include additional fields not shown in FIG. 5.

The fields of RTCP message 250 can be viewed as being grouped into three groups: a header 290, an RTP-State block 292, and the session description message 284. Header 290 includes various information about RTCP message 250. RTP-State block 292 is optional, and when included is used to identify RTP-specific information about a stream of the multimedia presentation that is described in the session description message (e.g., to specify the SSRC and initial RTP sequence number of a stream in the session description message). Typically, one RTP-State block 292 is associated with and included in RTCP message 250 for each media stream in the multimedia presentation. Session description message 284 is the session description message embedded within RTCP message 250.

V (version) field 252 is a 2-bit field that identifies the version of RTP being used, which is the same in RTCP packets as in RTP packets. For example, the version defined by RFC 3550 is 2.

P (padding) field 254 is a single bit that, when set (e.g., to a value of 1), indicates that RTCP message 250 contains some additional padding at the end which is not part of the control information. This padding is included in the length field 262, but otherwise should be ignored. The amount of padding is included within the padding itself. In certain implementations, the additional padding is in octets, and the last octet of the padding is a count of how many padding octets are included (including itself) and thus should be ignored.

C (compression) field 256 is a single bit that, when set (e.g., has a value of 1), indicates that the data in SDP data field 284 has been compressed. Different types of compression can be used, such as using Zlib compression as discussed in ZLIB Compressed Data Format Specification version 3.3, Network Working Group Request for Comments (RFC) 1950, May 1996.

Res (reserved) field 258 is a 4-bit reserved field. In certain implementations, Res field 258 should be set to zero.

PT (payload type) header field 260 is a 7-bit field set to a value (e.g., 141) to indicate that RTCP message 250 embeds a session description message.

Length field 262 is a 16-bit field that identifies the length of RTCP message 250. This length can be generated by summing the lengths of the various fields in RTCP message 250, including any headers and any padding. In certain implementations, the length is identified in 32-bit quantities minus one.

SDPMsgHash (SDP message hash) field 264 is a 16-bit field used to identify the session description message included in RTCP message 250 and an address (e.g., IP address) of the sender (e.g., server device 104). In certain implementations, the identifier in field 264 is calculated as a check-sum over the session description message and the address, so that if either changes, the value of the identifier in field 264 is also changed. In certain implementations, the value of SDPMsgHash field 264 is calculated in the same manner as the "msg id hash" field described in the Session Announcement Protocol (SAP), Network Working Group Request for Comments (RFC) 2974, October 2000. If the session description message is fragmented across multiple RTCP messages, as discussed below, the value of SDPMsgHash field 264 of each fragment should be identical.

F (more fragments) field 266 is a single bit that, when set (e.g., has a value of 1), indicates that the session description message has been fragmented into multiple RTCP messages, and that the current RTCP message does not contain the last fragment of the session description message. If F field 266 is not set (e.g., has a value of 0), then the session description message has not been fragmented (the complete session description message is included in RTCP message 250), or the session description message has been fragmented and RTCP message 250 contains the last fragment of the session description message.

FragSeqNum (fragment sequence number) field 268 is a 15-bit field used to identify different fragments of a session description message. The fragments of a session description message are assigned identifiers in some manner known to both server device 104 and client device 102. For example, the identifiers may be assigned sequentially starting with the value of 0, so the first fragment has a value 0, the second a value 1, the third a value 2, and so forth. If RTCP message 250 does not contain a fragment of a session description message (i.e., RTCP message 250 contains a complete session description message), then FragSeqNum field 268 should be set to 0.

NumRtpState (number RTP state) field 270 is a 16-bit field used to specify the number of RTP-State blocks contained in RTCP message 250. Each RTP-State block is 14 bytes in size. The "NumRtpState" field is set to 0 when no RTP-State blocks are present. In the illustrated example of RTCP message 250, there is one RTP-State block 292. If there are multiple RTP-State blocks, then a field 272, 274, 276, 278, 280, and 282 is included for each of the multiple RTP-State blocks. If a session description message is fragmented into multiple RTCP messages 250, then only the RTCP message 250 containing the first fragment of the session description message should contain an RTP-State block(s).

A field 272 is a 1-bit field that is not set (e.g., has a value of 0) if PT field 274 contains a valid RTP Payload Type number. If A field 272 is not set, the information in RTP-State block 292 only applies to the RTP Payload Type number identified in PT field 274 and the SDP Flow ID identified in Flow ID field 276. If A field 272 is set (e.g., has a value of 1), then PT field 274 should be ignored, and the RTP-State block 292 applies to all RTP packets for the SDP Flow ID identified in Flow ID field 276, irrespective of the RTP Payload Type used.

PT field 274 is a 7-bit field specifying the RTP Payload Type number for the information in RTP-State block 292. If A field 272 is set (e.g., has a value of 1), I then PT field 274 is not used and should be set to 0.

Flow ID field 276 is a 24-bit field that identifies the SDP Flow ID to which the information in RTP-State block 292 refers. Each media stream is streamed over a different RTP session. These RTP sessions are assigned a number using the "a=mid:" attribute as described in the Grouping of Media Lines in the Session Description Protocol (SDP) Network Working Group Request for Comments (RFC) 3388, December 2002. Flow ID field 276 identifies a particular "m=" entry in the session description message, which is the same as the value for the "a=mid" attribute (in accordance with RFC 3388) of the "m=" entry.

SSRC (synchronization source) field 278 is a 32-bit field which specifies the RTP SSRC field value used for the media stream which is identified by Flow ID field 276. If A field 272 is not set (e.g., has a value of 0), then SSRC field 278 only applies to RTP packets for this media stream that use the RTP Payload Type given by PT field 274.

RtpTime (RTP time) field 280 is a 32-bit field that specifies the value of the RTP Timestamp field that an RTP packet would have, if that packet was sent at exactly the beginning of the media stream identified by Flow ID field 276. For example, if the timeline of the media presentation begins at time T, the value of RtpTime field 280 is the value of the RTP Timestamp field of a packet that would be sent at exactly time T, even if no such RTP packet actually exists for the media stream identified by Rtp-State block 292.

RtpSeq (RTP sequence) field 282 is a 16-bit field that gives the value of the RTP sequence number field of the first RTP packet that is sent for the media stream identified by Flow ID field 276. If A field 272 is not set (e.g., has a value of 0), then RtpSeq field 282 only applies to RTP packets for this media stream that use the RTP Payload Type given by PT field 274.

SDP data field 284 is the session description message embedded in RTCP message 250. In situations where the session description message is fragmented, SDP data field 284 contains only a portion of the session description message (e.g., a single fragment of the session description message). In certain implementations, the session description message is a complete SDP description in UTF-8 format.

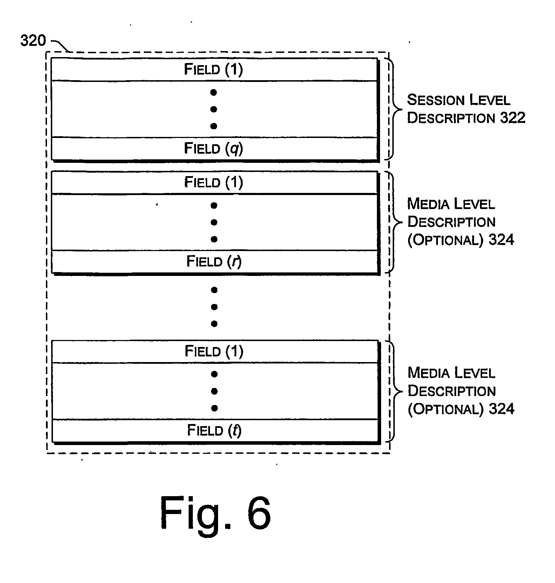

FIG. 6 illustrates an example session description message format. Although illustrated as a specific example in FIG. 6, the session description message could have a format with fields or portions in different orders, or alternatively spread across different messages.

Session description message 320 includes a session level description portion 322 and zero or more media level description portions 324. Session level description portion 322 includes one or more fields having data that applies to the whole session and all media streams that are part of the session. Each media level description portion 322, on the other hand, includes one or more fields having data that applies only to a single media stream.

The data fields in media level description portion 322 describe properties for particular media streams. These properties may be in addition to properties described in session level description portion 322, or in place of properties described in session level description portion 322. For example, one or more properties in a particular media level description portion 322 may override, for the particular media stream associated with that particular media level description portion 322, properties identified in session level description portion 322.

Session description message 320, and the structure of message 320 is discussed in additional detail below specifically with respect to SDP. It is to be appreciated that these specific structures are only examples, and that the session description message can take different forms.

Session level description portion 322 begins with a particular field, referred to as the protocol version field. Similarly, media level description portions 324 each start with a particular field, referred to as a media name and transport address field. In certain embodiments, multiple fields of the same type may be included in a session description message (e.g., a single session description message may have two or more attribute fields).

Table I below illustrates example fields that may be included in session level description portion 322. Table I includes a name for each example field, an abbreviation or type for each example field, and a brief discussion of each example field. In certain embodiments, the protocol version field, the owner/creator and session identifier field, the session name field, and the time description field are required whereas all other fields in Table I are optional.

**Table I**

| Name | Type | Description |
|---|---|---|
| protocol version | v= | The version of the SDP. |
| origin | o= | The originator of the session (e.g., user name and address of the user's host), plus a session id and a session version number. |
| session name | s= | The name of the session. |
| session information | i= | Information about the session. |
| URI of description | u= | A pointer to additional information about the session. |
| email address | e= | Email address of person responsible for the session. |
| phone number | p= | Phone number of person responsible for the session. |
| connection information | c= | Connection data describing the connection for the session, such as network type, type of addressing being used, and a connection address. |
| bandwidth information | b= | The proposed bandwidth to be used by the session. |
| time description | | See Table II below. |
| time zone adjustments | z= | Specifies adjustment times and offsets to allow for daylight-saving time. |
| encryption key | k= | Indicates the mechanism to be used to obtain an encryption key for the session by external means, or from an included encoded encryption key. |
| attribute | a= | Attribute of the session extending the SDP. |

Table II below illustrates the time description field in additional detail. Table II includes a name for each field in the time description field, an abbreviation or type for each field in the time description field, and a brief discussion of each field in the time description field. The time the session is active field is required whereas the zero or more repeat times field is optional.

**Table II**

| Name | Type | Description |
|---|---|---|
| time the session is active | t= | The start and stop times for the session. |
| zero or more repeat times | r= | Specifies repeat times for the session. |

Table III below illustrates example fields that may be included in a media level description portion 324. Table III includes a name for each example field, an abbreviation or type for each example field, and a brief discussion of each example field. In certain embodiments, the media announcement field is required whereas all other fields in Table III are optional.

**Table III**

| Name | Type | Description |
|---|---|---|
| media announcement | m= | The media type of the media stream, the transport port to which the media stream will be sent, the transport protocol for the media stream, and the media format(s) for the media stream. |
| media title | i= | Information about the media stream (e.g., a label for the media stream). |
| connection information | c= | Connection data describing the connection for the media stream, such as network type, type of addressing being used, and a connection address. |
| bandwidth information | b= | The proposed bandwidth to be used by the media stream. |
| encryption key | k= | Indicates the mechanism to be used to obtain an encryption key for the media stream by external means, or from an included encoded encryption key. |
| attribute | a= | Attribute of the media stream extending the SDP. |

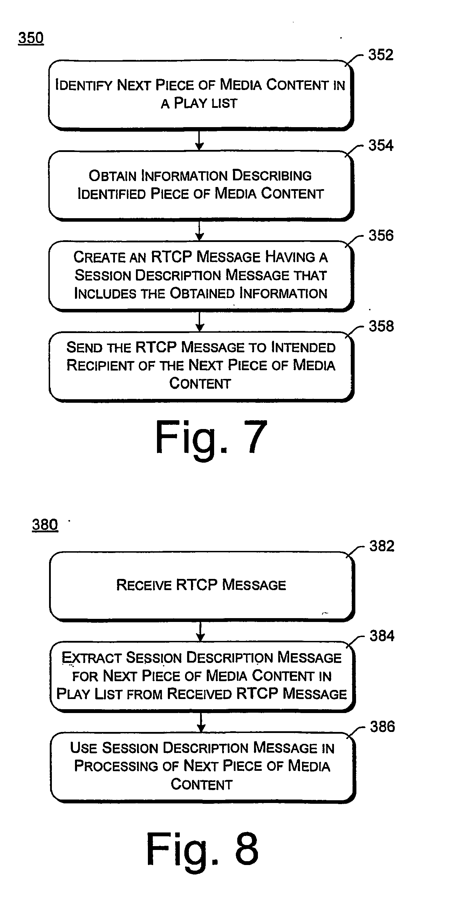

FIG. 7 is a flowchart illustrating an example process 350 for embedding session description messages in an RTCP message when using a server-side play list. FIG. 7 shows acts performed by a media content source, such as a server device 104 (e.g., of FIGS. 1, 2, 3, or 4).

Initially, the next piece of media content in the play list is identified (act 352). When playback of the pieces of media content begins, the next piece is the first piece identified in the play list. Additionally, each time the end of one piece of content is reached (e.g., the entire piece of content has been streamed to client device 102, even though play back of the piece at client device 102 has most likely not been completed yet), the next piece of media content is the piece that follows the piece whose end was reached. It should be noted that this next piece may be in the order defined by the play list, or the user may be able to navigate to a different piece within the play list (e.g., the user may be able to request that a particular piece in the play list be skipped or jumped over).

Information describing the identified piece of media content is then obtained (act 354). This information can be obtained in one or more different manners. One manner in which this information can be obtained is retrieval from a file or record. In certain embodiments, at least some of the information is stored in a file or record associated with the identified piece of media content. This file or record is accessed in act 354 to retrieve the information stored therein.

Another manner in which this information can be obtained is receipt from a human user. In certain embodiments, at least some of the information is received from a human user. These user inputs are used in act 354 as at least some of the information to be included in the session description message.

Another manner in which this information can be obtained is automatic detection. In certain embodiments, at least some of the information can be obtained automatically by a computing device by analyzing the source of the identified piece of media content or the identified piece of media content itself. This automatically detected information is used in act 354 as at least some of the information to be included in the session description message.

An RTCP message having a session description message that includes the obtained information is then created (act 356). In certain embodiments, this RTCP message is in the form of RTCP message 250 of FIG. 5 discussed above. The created RTCP message is then sent to the intended recipient of the next piece of media content (act 358). The intended recipient of the next piece of media content is the device to which the media content is being streamed (e.g., client device 102 of FIGS. 1, 2, 3, or 4). The created RTCP message is included in an RTCP packet that is included as part of the streaming media being streamed to the intended recipient.

It should be noted that situations can arise where the number of media streams being streamed for two different pieces of media content identified in a play list are different. For example, the first piece of media content identified in a play list may have two streams (e.g., an audio stream and a video stream), while the second piece of media content identified in a play list may have three streams (e.g., an audio stream, a video stream, and a text subtitle stream). Additionally, when streaming media using UDP, each media stream is typically using a different UDP channel that is received at the recipient on a different UDP port. If the recipient only opened two ports for the first piece of media content (e.g., one port for the audio stream and one port for the video stream), there would be no port available for the recipient to receive the text subtitle stream of the second piece of media content.

Such situations can be resolved in different manners. In certain embodiments, such situations are resolved by streaming the additional media stream(s) over an open HTTP connection using TCP. An indication is included in RTCP message 250 (e.g., as an additional RTP-State block 292 for each additional media stream) that the additional media stream(s) is being streamed in this manner.

In other embodiments, such situations are resolved by having the recipient open one or two extra ports, often referred to as wildcard ports. Each of these wildcard ports can be used to receive any media stream that the server device sends to the recipient. An indication is included in RTCP message 250 (e.g., as an additional RTP-State block 292 for each additional media stream) of which of the wildcard ports the additional media stream(s) is being streamed to.

In other embodiments, such situations are resolved by the server device sending the session description message to the recipient (e.g., in an RTCP message 250) that identifies all of the media streams available for the second piece of media content. The server device then waits for the recipient to select which of the media streams the recipient desires to receive. The recipient will make a selection (e.g., automatically or based on user input at the recipient), and send to the server device an indication of which media stream(s) were selected and which ports the selected media stream(s) are to be streamed to.

FIG. 8 is a flowchart illustrating an example process 380 for receiving session description messages in an RTCP message when using a server-side play list. FIG. 8 shows acts performed by a recipient of streaming media, such as a client device 102 (e.g., of FIGS. 1, 2, 3, or 4).

Initially, an RTCP message is received from a media content source (act 382). The media content source is, for example, a server device 104 of FIGS. 1, 2, 3, or 4.

A session description message for a next piece of media content in the play list is extracted from the RTCP message (act 384). When streaming of the pieces of media content in the play list is just beginning, this next piece of media content is the first piece of media content in the play list. After streaming of at least one of the pieces of media content has begun, the next piece of media content is the next piece identified in the play list. It should be noted that this next piece may be in the order defined by the play list, or the user may be able to navigate to a different piece within the play list (e.g., the user may be able to request that a particular piece in the play list be skipped or jumped over). It should also be noted that the session description message for the next piece of media content is typically received prior to playback of the current piece of media content being finished (to allow client device 102 to immediately begin playback of the next piece of media content when playback of the current piece of media content is finished).

The extracted session description message is then used in processing of the next piece of media content (act 386). This processing typically includes playback of the next piece of media content at client device 102.

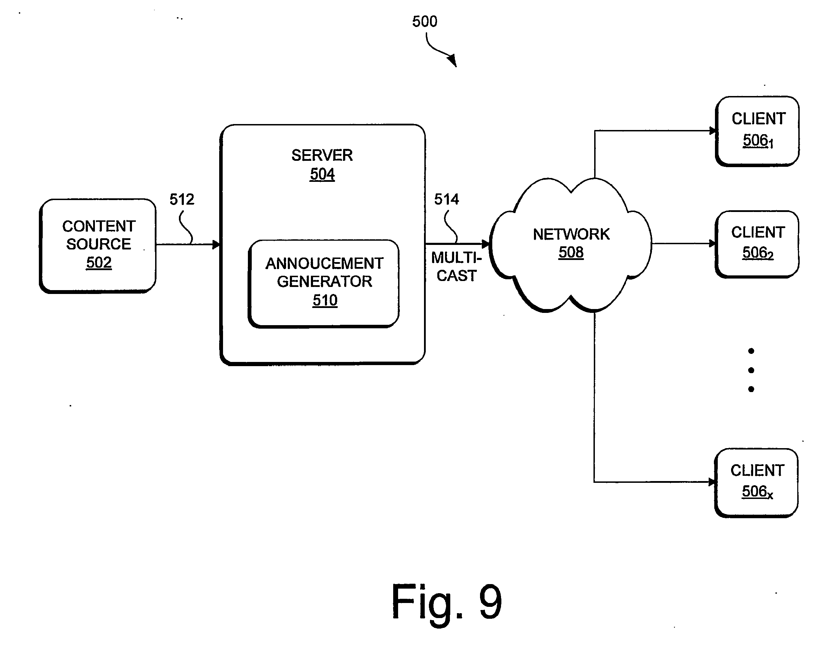

FIG. 9 illustrates a system 500 for multicasting multimedia presentations, according to one embodiment. In this embodiment, system 500 includes a content source 502, a server 504, and clients 506₁-506_{X} that are connected to server 504 via a network 508. Network 508 can be any suitable type of wired (including optical fiber) or wireless network (e.g., RF or free space optical). In one embodiment, network 508 is the Internet, but in other embodiments network 508 can be a local area network (LAN), a campus area network, etc.

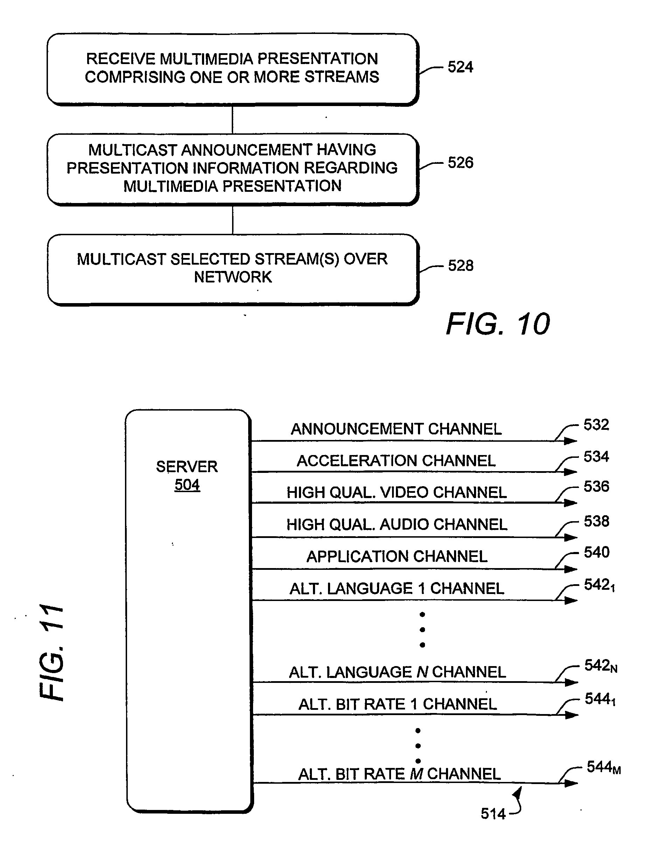

In this embodiment, server 504 includes an announcement generator 510. As will be described in more detail below, embodiments of announcement generator 510 generate streams containing information regarding multimedia presentations to be multicast over network 508. The operation of this embodiment of system 500500 in multicasting multimedia presentations is described below in conjunction with FIG. 10 through FIG. 12.

FIG. 10 illustrates server operational flow of system 500500 of FIG. 9 in multicasting a multimedia presentation, according to one embodiment. Referring to FIGS 9 and 502, server 504 operates as follows to multicast a multimedia presentation.

In a block 524, server 504 receives a multimedia presentation via a connection 512. In this embodiment, server 504 receives the multimedia presentation from content source 502 via a link 512. In particular, content source 502 provides multimedia content to be multicast over network 508. The multimedia content can be generated in any suitable manner. For example, the multimedia content may be previously recorded/generated content that is then stored in a datastore (not shown), or a live performance that is captured (e.g., using a video camera, microphone, etc.) and encoded (encoder not shown).

In a typical application, the multimedia presentation will include multiple streams. For example, the multimedia presentation may include a video stream, an audio stream, another video stream encoded at a lower bit rate and another audio streams encoded at a lower bit rate. In other applications, the multimedia presentation may have more or fewer streams than those described in this example application. Thus, in this embodiment, server 504 receives the multimedia presentation in the form of one or more streams in block 524.

In a block 526, server 504 forms an announcement stream and multicasts the announcement stream over network 508 via a link 514. In this embodiment, announcement generator 510 of server 504 forms the announcement stream. In some embodiments, announcement generator 510 may be configured by an administrator, while in other embodiments announcement generator 510 may be configured to process stream(s) received in block 524 and extract information from the stream(s) to form the announcement stream

In some embodiments, server 504 multicasts the announcement stream on a dedicated announcement channel (i.e., a channel without announcement information related to other multimedia presentations). As used in this context, a channel can be a logical address such as a multicast Internet protocol (IP) address and port. Thus, a client can join a channel by listening to the logical address and port associated with the channel. Clients may learn of the logical address in any suitable manner such as but not limited to email, invitations, website postings, and conventional Session Announcement Protocol (SAP) multicasts (e.g., as defined in Specification, IETF RFC-2974, entitled "Session Announcement Protocol". In embodiments using SAP multicasts to announce a multimedia presentation, the SAP multicast need not include the detailed presentation description information that would be provided in an "in-line" announcement stream (described in more detail below).

In some embodiments, the announcement stream is multicast "in-line" with a stream containing multimedia data. For example, the stream of multimedia data can be multicast using packets according to the Real-time Transport Protocol (RTP) and the announcement stream can be multicast using packets according to the Real-time Transport Control Protocol (RTCP). In one embodiment, the RTP is defined in Request For Comments (RFC) 3550, Internet Engineering Task Force (IETF), July, 2003 (which includes the specification of the RTCP as well). In this embodiment, the RTP is extended to support announcement data in RTCP packets. In a further refinement, the announcement data can be sent "in-line" in the same RTP packets (or other protocol packets/datagrams) as the multimedia data. In other embodiments, the announcement channel can be out-of-band (e.g., when the announcement channel is multicast using SAP.

The announcement stream contains information that describes the multimedia presentation such as, for example, identification of various channels used to multicast the multimedia presentation, descriptions of the stream (e.g., indicating the type of stream (e.g., video or audio); bit-rate of the stream; language used in the stream, etc.) being transported by each of the channels, error correction information; security/authentication information; encryption information; digital rights management (DRM) information, etc. In one embodiment, the announcement stream is repeatedly multicast during the multimedia presentation so that clients joining at different times may receive the multimedia presentation description information. A client receiving this presentation description information via the announcement stream can then determine which channel(s) are suitable to join based in view of its resources.

In a block 528, server 504 multicasts stream(s) selected from the stream(s) of the multimedia presentation received in block 524. In some scenarios, server 504 multicasts all of the streams received in block 524. In some embodiments, an administrator can configure server 504 to multicast particular streams in preselected channels. In one embodiment, server 504 supports at least an announcement channel, a video channel and an audio channel. More typically, server 504 will also support additional channels of video and audio streams of different bit rates to accommodate clients having different resources available to process the multimedia presentation.

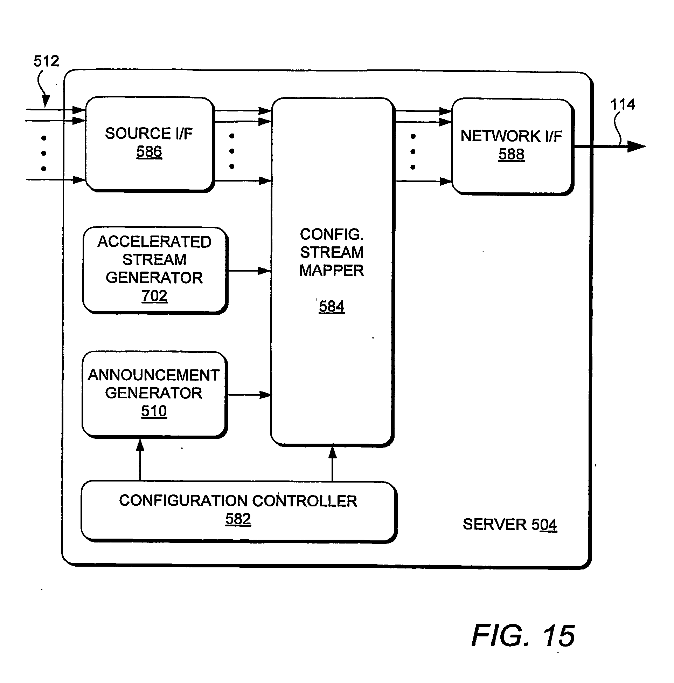

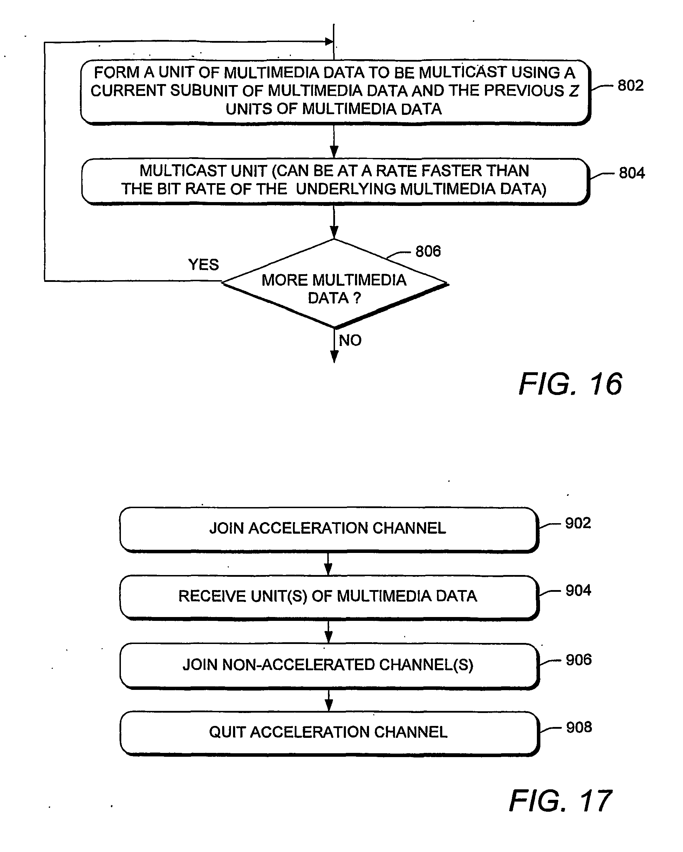

For example, as shown in FIG. 11, server 504 may be configured to support an announcement channel 532, an acceleration channel 534 (described below in conjunction with FIGS. 15 and 16), a high quality video channel 536, a high quality audio channel 538, an application channel 540, alternative language channels 542₁-542_{N}, and alternative bit rate channels 544₁-544_{M} (for audio and/or video streams). In one embodiment, application channel 540 can be used to multicast data used by applications expected to be running locally on the clients (e.g., a media player, or other applications that may require a plug-in to use the multicasted application data such as Microsoft PowerPoint® data). Depending on the streams provided by content source 502 and the configuration of server 504, and the preselected definition of the channels, server 504 may map a stream into only one channel, multiple channels or no channels. For example, if multimedia presentation from content source 502 includes an English language stream and a Spanish language stream, server 504 may be configured to map the Spanish language stream into all of channels 542₁-542_{N}, or only channel 542₁, or to no channel at all.

In some embodiments, the "layout" of the channels is preselected. For example, in embodiments in which each channel has its own IP address, the channels may be a set of sequential IP addresses in the range of IP addresses assigned for multicasting (i.e., the range of IP address 224.0.0.0 to IP address 239.255.255.255). Thus, announcement channel 532 may be assigned to IP address 231.0.0.1, acceleration channel 534 may be assigned to IP address 231.0.0.2, and high quality video channel 536 may be assigned to IP address 231.0.0.3, and so on. Similarly, the channels may be a set of sequential ports of a group IP address. Thus, in an RTP-based embodiment, announcement channel 532 may be assigned to port 231.0.0.1:5000, acceleration channel 534 may be assigned to port 231.0.0.1:5002, high quality video channel 536 may be assigned to port 231.0.0.1:5004, and so on (so that ports 5001, 5003 and 5005 can be used for the RTCP packets).

The approaches used by the above embodiments of system 500500 have several advantages. For example, because the announcement stream is multicast on a dedicated channel, a client can more quickly obtain the presentation description information, thereby advantageously reducing start up latency. In contrast, a conventional SAP multicast approach typically has a larger start up latency because SAP multicasts generally announce a large number of multicasts, which tends to reduce the frequency at which announcements for a particular multimedia presentation is multicast (which in turn tends to increase start up latency).

Further, these embodiments of system 500 do not require that clients have a back channel to server 504, thereby providing more flexibility in delivering multimedia presentations to a desired audience.

In addition, these embodiments of system 500 eliminates the need for the server to provide a "multicast information" file required in the previously-described conventional system, and, thus, the costs involved in maintaining and publishing this file.

Still further, because the streams being multicast in the set of channels are "predictable" in some embodiments, clients may choose to join particular channels without waiting to receive and process the multimedia presentation description information from announcement channel 532. For example, an aggressive client (typically a client with relatively large resources) may choose to join high quality video and high quality audio channels 536 and 538 concurrently with or instead of joining announcement channel 532, thereby reducing start up latency if the client indeed has sufficient resources to process the streams without losing data. For example, a client with large resources can be a client having a computing platform with high speed CPU and large buffering resources, and is connected to a highspeed computer network with a relatively large amount of available bandwidth. The high speed CPU and large buffering resources significantly reduce the risk of losing data.

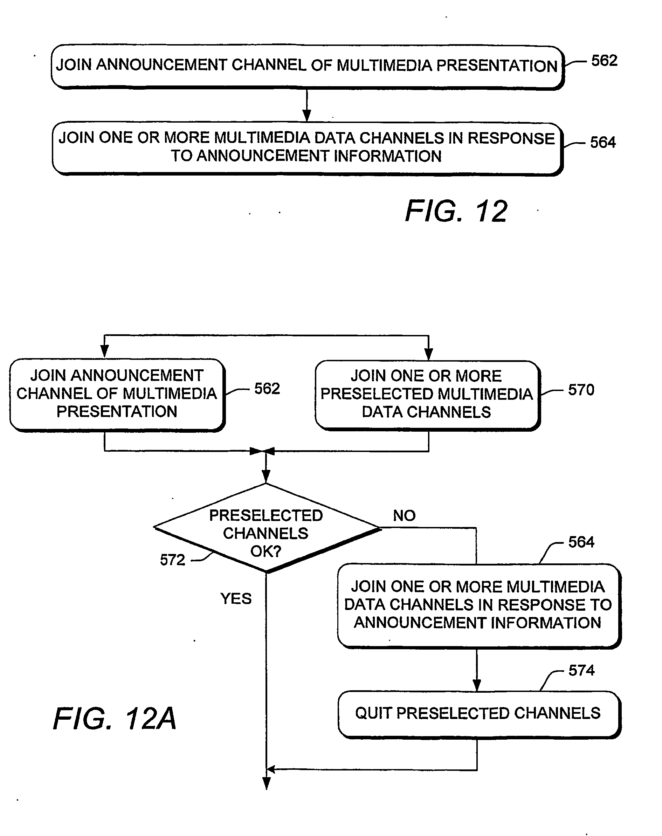

FIG. 12 illustrates operational flow of client 506₁ (FIG. 9) in receiving a multimedia presentation that is being multicast by server 504 (FIG. 9), according to one embodiment. Clients 506₂-506_{X} (FIG. 9) can operate in a substantially identical manner. Referring to FIGS. 9, 11 and 12, client 506₁ operates as follows in receiving the multimedia presentation.

In a block 562, client 506₁, having already received the logical address of the announcement channel of a multimedia presentation, joins announcement channel 532. As previously described for one embodiment, server 504 repeatedly multicasts presentation description information on a dedicated announcement channel. Thus, client 506₁ can relatively quickly receive the presentation description information compared to conventional systems that generally multicast description information of a relatively large number of multimedia and/or other types of presentations.

In a block 564, client 506₁ then joins one or more of the channels that provide multimedia data streams, which are described in the received announcement stream. In one embodiment, client 506₁ can determine which channel(s) to join to have an optimal experience using the resources available to client 506₁. Client 506₁ then can receive the selected stream(s) of the multimedia presentation.

FIG. 12A illustrates operational flow of client 506₁ (FIG. 9) in receiving a multimedia presentation that is being multicast by server 504 (FIG. 9), according to another embodiment. Clients 506₂-506_{X} (FIG. 9) can operate in a substantially identical manner. Referring to FIGS. 9, 11 and 12A, client 506₁ operates as follows in receiving the multimedia presentation. In this embodiment, client 506₁ substantially concurrently performs block 562 (to join announcement channel 532 as described above) and a block 570.

In block 570, client 506₁ also joins one or more preselected channels of the multimedia presentation in addition to announcement channel 532. As previously described for one embodiment, server 504 can be configured to multicast streams in preselected channels in a predetermined manner. In this embodiment, client 506₁ can take advantage of the preselected channel assignments to join desired channels without having to receive the presentation description information from announcement channel 532. For example, in one scenario, client 506₁ has relatively large resources to receive and process multimedia presentations, capable of handling typical high quality video and high quality audio streams. With these resources, client 506₁ can be configured to immediately join channels 536 and 538 to receive high quality video and high quality audio streams to reduce start up latency with a relatively high expectation that client 506₁ can properly process the streams.

In a decision block 572, client 506₁ determines whether it can optimally process the stream(s) received from the channel(s) it joined in block 570 in view of the resources available to client 506₁. In one embodiment, client 506₁ uses the presentation description information received from announcement channel 532 to determine whether its resources can handle the streams received on these channels. For example, the streams of channels joined in block 570 may have bit rates (which will be described in the announcement stream) that are too great for client 506₁ to process without losing data (which can result in choppy audio playback for audio streams or blocky video playback for video streams). If client 506₁ determines in block 572 that it can optimally process the stream(s) of the preselected channel(s), client 506₁ continues to receive the stream(s) from the channel(s) client 506₁ joined in block 570 until the multicasted multimedia presentation terminates.

However, in this embodiment, if client 506₁ in block 572 determines that it cannot optimally process the stream(s) of the preselected channel(s), the operational flow proceeds to block 564 (previously described in conjunction with FIG. 12). In block 564, using the presentation description information received in block 562, client 506₁ join one or more other channels that carry multimedia data streams that client 506₁ can optimally process. In a block 574, in this embodiment client 506₁ may quit the preselected channels joined in block 570. Client 506₁ continues to receive the stream(s) from the channels joined in block 564 until the multicasted multimedia presentation terminates or chooses to leave the channel.

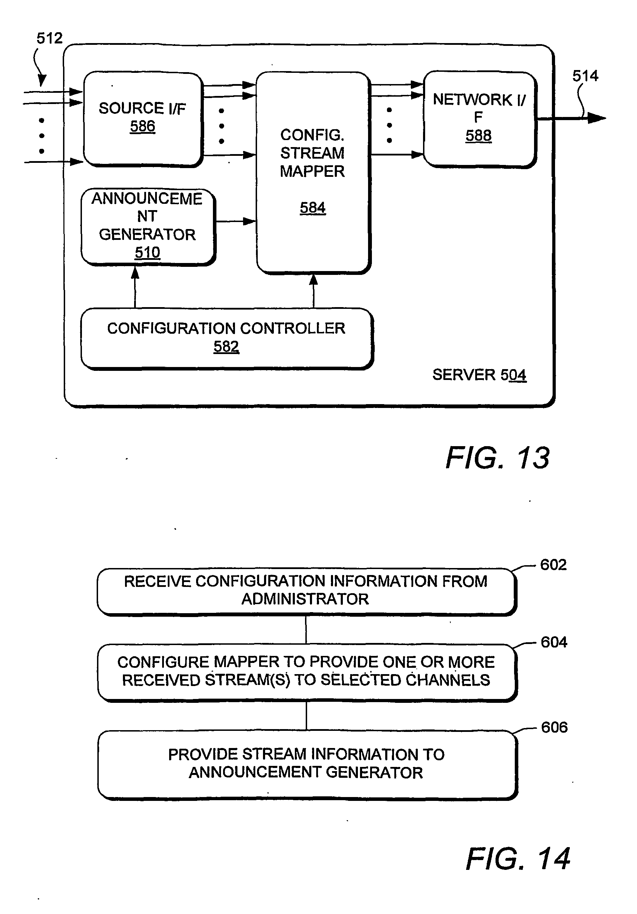

FIG. 13 illustrates some of the components of server 504 (FIG. 9), according to one embodiment. In this embodiment, in addition to announcement generator 510 (described above in conjunction with FIG. 9), server 504 includes a configuration controller 582, a configurable stream mapper 584, a source interface 586 and a network interface 588. In some embodiments, these elements are software modules or components that can be executed by a computing environment of server 504.

Source interface 586 is configured to receive one or more multimedia streams from content source 502 (FIG. 9) via link 512. Configurable stream mapper 582 is configured to receive the streams from source interface 586, an announcement stream from announcement generator 510, and control information from configuration controller 582. In this embodiment, configurable stream mapper 584 functions like a switch in mapping or directing one or more of the streams received from source interface 586 to multicast channel(s).. Network interface 588 multicasts the selected streams over network 508 (FIG. 9). In some embodiments, configuration controller 582 configures configurable stream mapper 584 to map the received stream(s) of the multimedia presentation into channel(s). In addition, in some embodiments configuration controller 582 directs announcement generator 510 in generating announcements. Operational flow of one embodiment of configuration controller 582 in is described below in conjunction with FIGS. 13 and 14.

FIG. 14 illustrates operational flow of configuration controller 582 (FIG. 13) in multicasting a multimedia presentation, according to one embodiment. Referring to FIGS 13 and 14, one embodiment of configuration controller 582 operates to multicast a multimedia presentation as described below.

In a block 602, this embodiment of configuration controller 582 receives configuration information from an administrator. The administrator can manually provide configuration information to configuration controller 582 of server 504. This configuration information may define each of the channels in terms of logical address, and include presentation description information (previously described). For example, the presentation information may include the media type(s) of the stream(s) of the multimedia presentation to be multicast, the bit-rate(s) of the stream(s); the language(s), error correction information; security/authentication information; encryption information; digital rights management (DRM) information, etc.

In alternative embodiments, configuration controller 586 may be configured to extract the presentation description information from the streams themselves (e.g., from header or metadata information included in the streams) after being received from content source 502 (FIG. 9) via source interface 586.

In a block 604, configuration controller 582 configures stream mapper 584 to map the announcement stream from announcement generator 510 and the multimedia data stream(s) from source interface 586 to the channels as described in the presentation description information. This announcement stream is repetitively multicast over the announcement channel by server 504 during the multicast of the multimedia presentation.

In a block 606, configuration controller 582 provides presentation description information for the stream(s) to announcement generator 510. As previously described, announcement generator 510 forms the announcement stream that includes the presentation description information.

As previously described, the "layout" of the channels may be preselected. For example, a client would be given a logical address (e.g., a URL) for joining a multicast multimedia presentation. In one embodiment, that first logical address is preselected to carry the announcement stream in one embodiment. In this example, the next sequential logical address is preselected to carry the acceleration channel, while the next sequential logical address is preselected to carry a high quality video stream, and so on as shown in the embodiment of FIG. 11. Configuration controller 582 configures stream mapper 584 to map the announcement stream and the multimedia data streams according to the preselected channel layout.

FIG. 15 illustrates some of the components of server 504 (FIG. 9), according to another embodiment. This alternative embodiment of server 504 is substantially similar to the embodiment of FIG. 13, except that this embodiment includes an accelerated stream generator 702. In one embodiment, accelerated stream generator 702 is configured to form a stream in which each unit of multimedia data that is multicast contains a current subunit of multimedia data and a preselected number of previous subunits of data. For example, an accelerated stream may be multicast so that a datagram contains the current frame(s) of the multimedia presentation and the frames of the previous five seconds. In this embodiment, accelerated stream generator 702 provides the accelerated stream to configurable stream mapper 584 to be mapped into a dedicated acceleration channel such as acceleration channel 534 (FIG. 11). However, in other embodiments, an acceleration channel datagram need not include the current frame(s).

FIG. 16 illustrates operational flow of server 504 with accelerated stream generator 702 (FIG. 15), according to one embodiment. Referring to FIGS. 15 and 16, this embodiment of server 504 operates as described below.

In a block 802, accelerated stream generator 702 forms a unit of multimedia data for multicast over network 508 (FIG. 9). In this embodiment, accelerated stream generator 702 forms the unit using a current subunit of the multimedia presentation data and the previous Z subunits of multimedia presentation data. As previously mentioned, the unit may be a datagram or packet, and the subunits may be frames of multimedia data. In one embodiment, Z is selected to ensure that the unit (i.e., packet or datagram) will contain a key frame needed to render or decode the multimedia data. In other embodiments, Z is selected without regard to whether the unit will be ensured of having a key frame.

In a block 804, the unit of multimedia data formed in block 802 is multicast over network 508 (FIG. 9). In this embodiment, accelerated stream generator 702 provides the unit of multimedia data to configurable stream mapper 584, which then maps the block to the acceleration channel. Server 504 then multicasts the unit of multimedia data over network 508 (FIG. 9) via network interface 588. In one embodiment, server 504 multicasts the unit at a rate that is "faster than real time" (i.e., at a bit rate that is faster than the bit rate of the underlying multimedia data). This approach advantageously allows a client having relatively large resources to join the acceleration channel and quickly fill the buffer of its multimedia player in receiving the unit so that rendering or playback can begin more quickly. This feature is enhanced in embodiments in which the multicasted unit of multimedia data includes a key frame. Alternatively, the rate at which server 504 multicasts the unit need not be "faster than real time". This approach may be used in applications in which the client concurrently joins both the acceleration channel and another channel that multicasts multimedia data so that, in effect, the client receives the multimedia data at a rate that is "faster than real-time."

If more multimedia data is to be multicasted, the operational flow returns to block 802, as represented in decision block 806. Thus, for example, using the above example of multimedia frames transported in datagrams, the next datagram would include the next frame of multimedia data, plus the frame added in the previous datagram, plus the previous (Z-1) frames. Thus, in this embodiment, each unit (e.g., datagram) represents a sliding window of the current subunit (e.g., frame) and the previous Z frames, with Z selected to be large enough to ensure that each unit has enough information to minimize the time needed to allow the client's multimedia player to start rendering/playback of the multimedia presentation. As previously mentioned, in some embodiments Z may be selected to ensure that each unit has a key frame.

In one embodiment, units of video and audio data are multicasted in an alternating manner on the same channel if the multimedia presentation includes both audio and video streams. In other embodiments, separate acceleration channels may be used for audio and video streams.

At the start of a multimedia presentation, one embodiment of accelerated stream generator waits until at least Z subunits of multimedia data have been multicasted in the non-accelerated channel(s) before forming a unit of data in block 802.

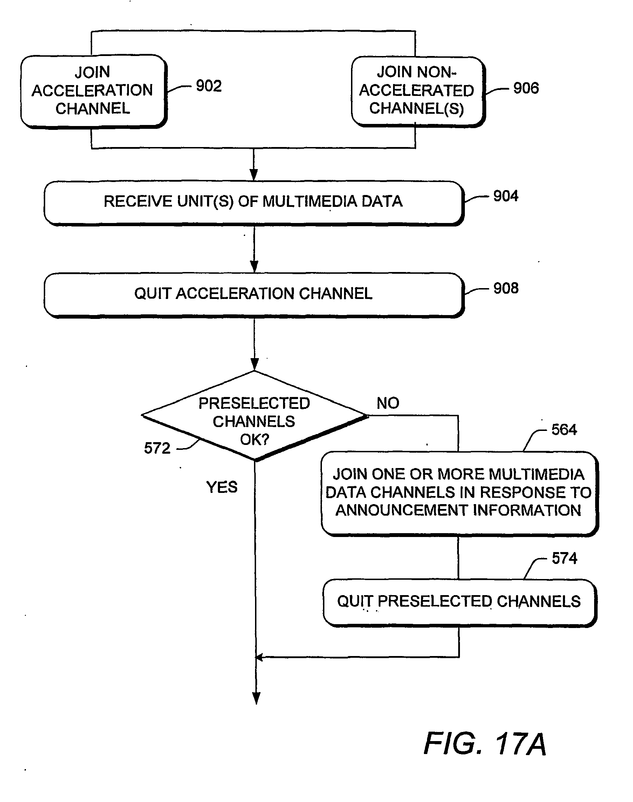

FIG. 17 illustrates client operational flow in receiving an accelerated stream, according to one embodiment. In a block 902, a client (e.g., one of clients 506₁-506_{X} of FIG. 9) joins the acceleration channel. In some scenarios, the acceleration channel is part of the preselected channel layout and the client can join it either concurrently or without joining the announcement channel. As previously described, the acceleration channel can be advantageously used by a client having relatively large resources for receiving and processing multimedia presentations so that the client may reduce start up latency.

In a block 904, the client receives one or more units of multimedia data from the acceleration channel. In one embodiment, each unit of multimedia data is generated as described above in conjunction with FIG. 16. The client can then process each unit of multimedia data to relatively quickly begin the rendering or playback process. In one scenario, the client receives a unit of video data and a unit of audio data, with the video data containing a key frame so that the client can begin the rendering/playback process as soon as possible. As previously described, a unit need not have a key frame in other embodiments.

In a block 906, the client can then join a non-accelerated channel such as high quality video channel 536 and high quality audio channel 538. In one embodiment, the non-accelerated channels that the client joins are preselected using the above-described preselected channel layout. In other embodiments, the client joins channel(s) based on the presentation description information contained in announcement stream. In a block 908, the client quits the acceleration channel. In one embodiment, the client quits the acceleration channel immediately after receiving the unit or units of multimedia data needed to begin the rendering/playback process or processes.

Although blocks 902 through 908 are described as being performed sequentially, in the flow chart of FIG. 17 (as well as the other flow charts described herein) the blocks may be performed in orders different from that shown, or with some blocks being performed more than once or with some blocks being performed concurrently or a combination thereof. For example, in some embodiments, blocks 902 and 906 are performed in parallel so that the operational flow is that the client joins accelerated and non-accelerated channels concurrently. Block 904 is performed sequentially after block 902, with block 904 and 906 proceeding to block 908.

FIG. 17A illustrates an example scenario in which a client may join the acceleration channel and some preselected channels, and then join other channels (e.g., based on announcement information received from the announcement channel). In this example, the client joins the acceleration channel (i.e., block 902) concurrently with joining one or more preselected non-accelerated channels (i.e., block 906). Then the client receives one or more units of multimedia data from the acceleration channel (i.e., block 904) as well as multimedia and announcement data from the non-accelerated channel(s). As a result of joining the announcement channel, the client may decide to quit the preselected channel(s) and join other non-accelerated channels (i.e., blocks 572, 564 and 574).

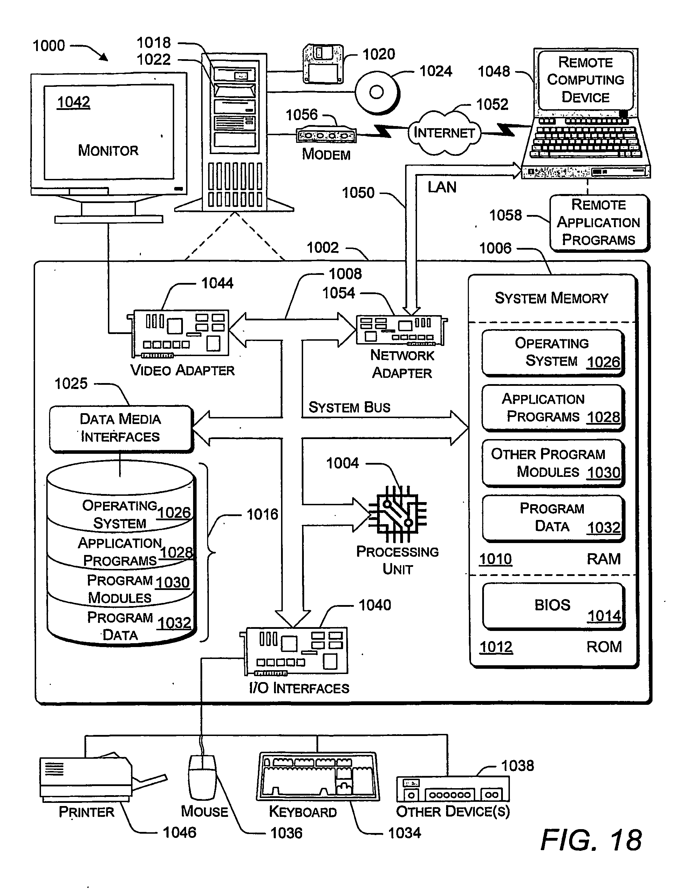

The various multicasting embodiments described above may be implemented in computer environments of the server and clients. An example computer environment suitable for use in the server and clients is described below in conjunction with FIG. 18.

FIG. 18 illustrates a general computer environment 1000, which can be used to implement the techniques described herein. The computer environment 1000 is only one example of a computing environment and is not intended to suggest any limitation as to the scope of use or functionality of the computer and network architectures. Neither should the computer environment 1000 be interpreted as having any dependency or requirement relating to any one or combination of components illustrated in the example computer environment 1000.

Computer environment 1000 includes a general-purpose computing device in the form of a computer 1002. The components of computer 1002 can include, but are not limited to, one or more processors or processing units 1004, system memory 1006, and system bus 1008 that couples various system components including processor 1004 to system memory 1006.

System bus 1008 represents one or more of any of several types of bus structures, including a memory bus or memory controller, a peripheral bus, an accelerated graphics port, and a processor or local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, a Peripheral Component Interconnects (PCI) bus also known as a Mezzanine bus, a PCI Express bus, a Universal Serial Bus (USB), a Secure Digital (SD) bus, or an IEEE 1394, i.e., FireWire, bus.

Computer 1002 may include a variety of computer readable media. Such media can be any available media that is accessible by computer 1002 and includes both volatile and non-volatile media, removable and non-removable media.

System memory 1006 includes computer readable media in the form of volatile memory, such as random access memory (RAM) 1010; and/or non-volatile memory, such as read only memory (ROM) 1012 or flash RAM. Basic input/output system (BIOS) 1014, containing the basic routines that help to transfer information between elements within computer 1002, such as during start-up, is stored in ROM 1012 or flash RAM. RAM 1010 typically contains data and/or program modules that are immediately accessible to and/or presently operated on by processing unit 1004.

Computer 1002 may also include other removable/non-removable, volatile/non-volatile computer storage media. By way of example, FIG. 10 illustrates hard disk drive 1016 for reading from and writing to a non-removable, non-volatile magnetic media (not shown), magnetic disk drive 1018 for reading from and writing to removable, non-volatile magnetic disk 1020 (e.g., a "floppy disk"), and optical disk drive 1022 for reading from and/or writing to a removable, non-volatile optical disk 1024 such as a CD-ROM, DVD-ROM, or other optical media. Hard disk drive 1016, magnetic disk drive 1018, and optical disk drive 1022 are each connected to system bus 1008 by one or more data media interfaces 1025. Alternatively, hard disk drive 1016, magnetic disk drive 1018, and optical disk drive 1022 can be connected to the system bus 1008 by one or more interfaces (not shown).

The disk drives and their associated computer-readable media provide non-volatile storage of computer readable instructions, data structures, program modules, and other data for computer 1002. Although the example illustrates a hard disk 1016, removable magnetic disk 1020, and removable optical disk 1024, it is appreciated that other types of computer readable media which can store data that is accessible by a computer, such as magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like, can also be utilized to implement the example computing system and environment.

Any number of program modules can be stored on hard disk 1016, magnetic disk 1020, optical disk 1024, ROM 1012, and/or RAM 1010, including by way of example, operating system 1026, one or more application programs 1028, other program modules 1030, and program data 1032. Each of such operating system 1026, one or more application programs 1028, other program modules 1030, and program data 1032 (or some combination thereof) may implement all or part of the resident components that support the distributed file system.

A user can enter commands and information into computer 1002 via input devices such as keyboard 1034 and a pointing device 1036 (e.g., a "mouse"). Other input devices 1038 (not shown specifically) may include a microphone, joystick, game pad, satellite dish, serial port, scanner, and/or the like. These and other input devices are connected to processing unit 1004 via input/output interfaces 1040 that are coupled to system bus 1008, but may be connected by other interface and bus structures, such as a parallel port, game port, or a universal serial bus (USB).

Monitor 1042 or other type of display device can also be connected to the system bus 1008 via an interface, such as video adapter 1044. In addition to monitor 1042, other output peripheral devices can include components such as speakers (not shown) and printer 1046, which can be connected to computer 1002 via I/O interfaces 1040.

Computer 1002 can operate in a networked environment using logical connections to one or more remote computers, such as remote computing device 1048. By way of example, remote computing device 1048 can be a PC, portable computer, a server, a router, a network computer, a peer device or other common network node, and the like. Remote computing device 1048 is illustrated as a portable computer that can include many or all of the elements and features described herein relative to computer 1002. Alternatively, computer 1002 can operate in a non-networked environment as well.

Logical connections between computer 1002 and remote computer 1048 are depicted as a local area network (LAN) 1050 and a general wide area network (WAN) 1052. Such networking environments are commonplace in offices, enterprise-wide computer networks, intranets, and the Internet.

When implemented in a LAN networking environment, computer 1002 is connected to local network 1050 via network interface or adapter 1054. When implemented in a WAN networking environment, computer 1002 typically includes modem 1056 or other means for establishing communications over wide network 1052. Modem 1056, which can be internal or external to computer 1002, can be connected to system bus 1008 via I/O interfaces 1040 or other appropriate mechanisms. It is to be appreciated that the illustrated network connections are examples and that other means of establishing at least one communication link between computers 1002 and 1048 can be employed.

In a networked environment, such as that illustrated with computing environment 1000, program modules depicted relative to computer 1002, or portions thereof, may be stored in a remote memory storage device. By way of example, remote application programs 1058 reside on a memory device of remote computer 1048. For purposes of illustration, applications or programs and other executable program components such as the operating system are illustrated herein as discrete blocks, although it is recognized that such programs and components reside at various times in different storage components of computing device 1002, and are executed by at least one data processor of the computer.

Various modules and techniques may be described herein in the general context of computer-executable instructions, such as program modules, executed by one or more computers or other devices. Generally, program modules include routines, programs, objects, components, data structures, etc. for performing particular tasks or implement particular abstract data types. These program modules and the like may be executed as native code or may be downloaded and executed, such as in a virtual machine or other just-in-time compilation execution environment. Typically, the functionality of the program modules may be combined or distributed as desired in various embodiments.

An implementation of these modules and techniques may be stored on or transmitted across some form of computer readable media. Computer readable media can be any available media that can be accessed by a computer. By way of example, and not limitation, computer readable media may comprise "computer storage media" and "communications media."

"Computer storage media" includes volatile and non-volatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

"Communication media" typically embodies computer readable instructions, data structures, program modules, or other data in a modulated data signal, such as carrier wave or other transport mechanism. Communication media also includes any information delivery media. The term "modulated data signal" means a signal that has one or more of its characteristics set or changed in such a manner as to encode information in the signal. As a non-limiting example only, communication media includes wired media such as a wired network or direct-wired connection, and wireless media such as acoustic, RF, infrared, and other wireless media. Combinations of any of the above are also included within the scope of computer readable media.

## Claims

1. A method implemented at a device, the method comprising:
creating (356) a Real-Time Control Protocol, RTCP, message that includes a session description message, the session description message being:
a Session Description Protocol, SDP, session description message; and
associated with one of a plurality of pieces of media content in a play list of media content being streamed from the device to a client device; and
sending (358) the RTCP message to the client device, the RTCP message including:
a first field containing data identifying the RTCP message as being a type that embeds the session description message;
a second field containing data that is the session description message; and
a third field containing data identifying a length of the RTCP message that is generated by summing a length of the first field, a length of the second field and a length of the third field.

2. A method as recited in claim 1, further comprising:
creating a second RTCP message that includes a second session description message, the second session description message being associated with a second of the plurality of pieces of media content in the play list; and
sending the second RTCP message to the client device.

3. A method as recited in claim 1, wherein the device comprises a server device.

4. A method as recited in claim 1, wherein the RTCP message is part of an RTCP packet.

5. A method as recited in claim 1, wherein the RTCP message further comprises:
one or more Real-time Transport Protocol, RTP, State blocks, each RTP-State block identifying RTP-specific information about a media stream of the one of the plurality of pieces of media content; and
the third field containing data identifying the length of the RTCP message, generated by summing the length of the first field, the length of the second field, the length of the third field, and a length of the one or more RTP-State blocks.

6. A method as recited in claim 1, wherein the RTCP message further comprises:
a fourth field containing one or more of:
data identifying a version of RTP being used to stream the one of the plurality of pieces of media content;
data identifying whether additional padding is included in the RTCP message;
data identifying whether the data in the second field has been compressed;
data identifying the session description message and an address of a sender of the session description message;
data identifying a number of RTP-State blocks contained in the RTCP message;
data identifying whether data in an RTP-State block of the RTCP message applies to all RTP packets having a particular SDP Flow ID or only to RTP packets having a particular RTP Payload Type number;
data identifying an RTP Payload Type number for an RTP-State block of the RTCP message;
data identifying a media stream of the one of the plurality of pieces of media content which an RTP-State block of the RTCP message refers;
data identifying a source of a media stream of the one of the plurality of pieces of media content to which an RTP-State block of the RTCP message refers;
data identifying a value of an RTP Timestamp field that an RTP packet for a media stream of the one of the plurality of pieces of media content would have if the RTP packet was sent at the beginning of the media stream; and
data identifying a value of an RTP sequence number field of a first RTP packet that is sent for a media stream of the one of the plurality of pieces of media content; and
the third field containing data identifying the length of the RTCP message, generated by summing the length of the first field, the length of the second field, the length of the third field, and a length of the fourth field.

7. A method as recited in claim 6, wherein the data identifying the session description message and the address of the sender of the session description message includes a check-sum calculated over the session description message and the address of the sender of the session description message.

8. A method as recited in claim 6, wherein the data identifying the number of RTP-State blocks contains a value of zero to indicate that no RTP-State blocks are contained in the RTCP message.

9. A method as recited in claim 1, wherein the RTCP message further comprises:
a fourth field containing data that indicates that the RTCP message contains a fragment of the session description message;
a fifth field containing data that identifies the fragment; and
the third field containing data identifying the length of the RTCP message, generated by summing the length of the first field, the length of the second field, the length of the third field, a length of the fourth field, and a length of the fifth field.

10. A method as recited in claim 1, wherein the RTCP message further comprises:
a fourth field containing data that identifies a version of RTP being used to stream the one of the plurality of pieces of media content;
a fifth field containing data identifying whether additional padding is included in the RTCP message; and
the third field containing data identifying the length of the RTCP message, generated by summing the length of the first field, the length of the second field, the length of the third field, a length of the fourth field, and a length of the fifth field.

11. A method implemented at a device, the method comprising:
receiving (382), from a media content source, a Real-Time Control Protocol, RTCP, message;
extracting (384), from the RTCP message, a session description message associated with one of a plurality of pieces of media content in a play list of media content being streamed from the media content source to the device, the session description message being a Session Description Protocol, SDP, session description message, and the RTCP message including:
a first field containing data identifying the RTCP message as being a type that embeds the SDP session description message;
a second field containing data that is the SDP session description message; and
a third field containing data identifying a length of the RTCP message that is generated by summing a length of the first field, a length of the second field, and a length of the third field; and
processing (386) the one of the plurality of pieces of media content based at least in part on the session description message.

12. A method as recited in claim 11, further comprising playing back the one of the plurality of pieces of media content at the device.

13. A method as recited in claim 11, further comprising repeating the receiving, extracting, and processing for each of the other pieces of media content in the plurality of pieces of media content.

14. A system comprising:
a server device (504) configured to:
create a Real-Time Control Protocol, RTCP, message that includes a session description message, the session description message being a Session Description Protocol, SDP, session description message and being associated with one of a plurality of pieces of media content in a play list of media content being streamed from the server device to a client device; and
send the RTCP message to the client device, the RTCP message including:
one or more Real-time Transport Protocol, RTP, State blocks, each RTP-State block identifying RTP-specific information about a media stream of one of the plurality of pieces of media content;
a first field containing data identifying the RTCP message as being a type that embeds the session description message;
a second field containing data that is the session description message; and
a third field containing data identifying a length of the RTCP message that is generated by summing a length of the one or more RTP-State blocks, a length of the first field, a length of the second field, and a length of the third field; and
a client device (506) configured to:
receive, from the server device, the RTCP message;
extract, from the RTCP message, the session description message; and
process the one of the plurality of pieces of media content based at least in part on the session description message.

## Patentansprüche

1. Verfahren, das an einer Vorrichtung implementiert ist, wobei das Verfahren umfasst:
Erstellen (356) einer RTCP-Nachricht (Real-Time Control Protocol RTCP, Echtzeitsteuerprotokoll), die eine Sitzungsbeschreibungsnachricht beinhaltet, wobei die Sitzungsbeschreibungsnachricht:
eine SDP-Sitzungsbeschreibungsnachricht (Session Description Protocol SDP, Sitzungsbeschreibungsprotokoll) ist; und
einem aus einer Mehrzahl von Stücken von Medieninhalt in einer Abspielliste (play list) von Medieninhalt zugeordnet ist, der mittels Stream von der Vorrichtung an eine Client-Vorrichtung übertragen wird; und
Senden (358) der RTCP-Nachricht an die Client-Vorrichtung, wobei die RTCP-Nachricht beinhaltet:
ein erstes Feld, das Daten enthält zum Identifizieren der RTCP-Nachricht als ein Typ, der die Sitzungsbeschreibungsnachricht einbettet;
ein zweites Feld, das Daten enthält, die die Sitzungsbeschreibungsnachricht sind; und
ein drittes Feld, das Daten enthält zum Identifizieren einer Länge der RTCP-Nachricht, welche durch Summieren einer Länge des ersten Feldes, einer Länge des zweiten Feldes und einer Länge des dritten Feldes erzeugt wird.

2. Verfahren nach Anspruch 1, des Weiteren umfassend:
Erstellen einer zweiten RTCP-Nachricht, die eine zweite Sitzungsbeschreibungsnachricht beinhaltet, wobei die zweite Sitzungsbeschreibungsnachricht einem zweiten aus der Mehrzahl von Stücken von Medieninhalt in der Abspielliste zugeordnet ist; und
Senden der zweiten RTCP-Nachricht an die Client-Vorrichtung.

3. Verfahren nach Anspruch 1, wobei die Vorrichtung eine Server-Vorrichtung umfasst.

4. Verfahren nach Anspruch 1, wobei die RTCP-Nachricht ein Teil eines RTCP-Paketes ist.

5. Verfahren nach Anspruch 1, wobei die RTCP-Nachricht des Weiteren umfasst:
einen oder mehrere RTP-Zustandsblöcke (Real-Time Transport Protocol RTP, Echtzeittransportprotokoll), wobei jeder RTP-Zustandsblock RTP-spezifische Information über einen Medienstream des einen aus der Mehrzahl von Stücken von Medieninhalt identifiziert; und
das dritte Feld Daten enthält zum Identifizieren der Länge der RTCP-Nachricht, welche durch Summieren der Länge des ersten Feldes, der Länge des zweiten Feldes, der Länge des dritten Feldes und einer Länge des einen oder der mehreren RTP-Zustandsblöcke erzeugt wird.

6. Verfahren nach Anspruch 1, wobei die RTCP-Nachricht des Weiteren umfasst:
ein viertes Feld, das eines oder mehrere enthält von:
Daten zum Identifizieren einer Version von RTP, das zum mittels Stream erfolgenden Übertragen des einen aus der Mehrzahl von Stücken von Medieninhalt verwendet wird;
Daten zum Identifizieren, ob zusätzliches Padding in der RTCP-Nachricht beinhaltet ist;
Daten zum Identifizieren, ob die Daten in dem zweiten Feld komprimiert worden sind;
Daten zum Identifizieren der Sitzungsbeschreibungsnachricht und einer Adresse eines Senders der Sitzungsbeschreibungsnachricht;
Daten zum Identifizieren einer Anzahl von RTP-Zustandsblöcken, die in der RTCP-Nachricht enthalten sind;
Daten zum Identifizieren, ob Daten in einem RTP-Zustandsblock der RTCP-Nachricht für alle RTP-Pakete mit einer bestimmten SDP-Flow-ID oder nur für RTP-Pakete mit einer bestimmten RTP-Payloadtyp-Nummer gelten;
Daten zum Identifizieren einer RTP-Payloadtyp-Nummer für einen RTP-Zustandsblock der RTCP-Nachricht;
Daten zum Identifizieren eines Medienstreams des einen aus der Mehrzahl von Stücken von Medieninhalt, worauf sich ein RTP-Zustandsblock der RTCP-Nachricht bezieht;
Daten zum Identifizieren einer Quelle eines Medienstreams des einen aus der Mehrzahl von Stücken von Medieninhalt, worauf sich ein RTP-Zustandsblock der RTCP-Nachricht bezieht;
Daten zum Identifizieren eines Wertes eines RTP-Zeitstempel-Feldes, das ein RTP-Paket für einen Medienstream des einen aus der Mehrzahl von Stücken von Medieninhalt aufweisen würde, wenn das RTP-Paket zu Beginn des Medienstreams gesendet worden wäre; und
Daten zum Identifizieren eines Wertes eines RTP-Sequenznummerfeldes eines ersten RTP-Paketes, das für einen Medienstream des einen aus der Mehrzahl von Stücken von Medieninhalt gesendet wird; und
das dritte Feld Daten enthält zum Identifizieren der Länge der RTCP-Nachricht, welche durch Summieren der Länge des ersten Feldes, der Länge des zweiten Feldes, der Länge des dritten Feldes und einer Länge des vierten Feldes erzeugt wird.

7. Verfahren nach Anspruch 6, wobei die Daten zum Identifizieren der Sitzungsbeschreibungsnachricht und der Adresse des Senders der Sitzungsbeschreibungsnachricht eine Prüfsumme beinhalten, die über die Sitzungsbeschreibungsnachricht und die Adresse des Senders der Sitzungsbeschreibungsnachricht berechnet ist.

8. Verfahren nach Anspruch 6, wobei die Daten zum Identifizieren der Anzahl von RTP-Zustandsblöcken einen Wert von Null enthalten, um anzugeben, dass keine RTP-Zustandsblöcke in der RTCP-Nachricht enthalten sind.

9. Verfahren nach Anspruch 1, wobei die RTCP-Nachricht des Weiteren umfasst:
ein viertes Feld, das Daten enthält, die angeben, dass die RTCP-Nachricht ein Fragment der Sitzungsbeschreibungsnachricht enthält;
ein fünftes Feld, das Daten enthält zum Identifizieren des Fragmentes; und
wobei das dritte Feld Daten enthält zum Identifizieren der Länge der RTCP-Nachricht, welche durch Summieren der Länge des ersten Feldes, der Länge des zweiten Feldes, der Länge des dritten Feldes, einer Länge des vierten Feldes und einer Länge des fünften Feldes erzeugt wird.

10. Verfahren nach Anspruch 1, wobei die RTCP-Nachricht des Weiteren umfasst:
ein viertes Feld, das Daten enthält zum Identifizieren einer Version von RTP, das zum mittels Stream erfolgenden Übertragen des einen aus der Mehrzahl von Stücken von Medieninhalt verwendet wird;
ein fünftes Feld, das Daten enthält zum Identifizieren, ob zusätzliches Padding in der RTCP-Nachricht beinhaltet ist; und
wobei das dritte Feld Daten enthält zum Identifizieren der Länge der RTCP-Nachricht, welche durch Summieren der Länge des ersten Feldes, der Länge des zweiten Feldes, der Länge des dritten Feldes, einer Länge des vierten Feldes und einer Länge des fünften Feldes erzeugt wird.

11. Verfahren, das an einer Vorrichtung implementiert ist, wobei das Verfahren umfasst:
von einer Medieninhaltsquelle erfolgendes Empfangen (382) einer RTCP-Nachricht (Real-Time Control Protocol RTCP, Echtzeitsteuerprotokoll);
aus der RTCP-Nachricht erfolgendes Extrahieren (384) einer Sitzungsbeschreibungsnachricht, die einem aus einer Mehrzahl von Stücken von Medieninhalt in einer Abspielliste (play list) von Medieninhalt zugeordnet ist, der mittels Stream von der Medieninhaltsquelle an die Vorrichtung übertragen wird, wobei die Sitzungsbeschreibungsnachricht eine SDP-Sitzungsbeschreibungsnachricht (Session Description Protocol SDP, Sitzungsbeschreibungsprotokoll) ist und die RTCP-Nachricht beinhaltet:
ein erstes Feld, das Daten enthält zum Identifizieren der RTCP-Nachricht als ein Typ, der die SDP-Sitzungsbeschreibungnachricht einbettet;
ein zweites Feld, das Daten enthält, die die SDP-Sitzungsbeschreibungsnachricht sind; und
ein drittes Feld, das Daten enthält zum Identifizieren einer Länge der RTCP-Nachricht, welche durch Summieren einer Länge des ersten Feldes, einer Länge des zweiten Feldes und einer Länge des dritten Feldes erzeugt wird; und
Verarbeiten (386) des einen aus der Mehrzahl von Stücken von Medieninhalt wenigstens teilweise auf Grundlage der Sitzungsbeschreibungsnachricht.

12. Verfahren nach Anspruch 11, des Weiteren umfassend ein Abspielen des einen aus der Mehrzahl von Stücken von Medieninhalt an der Vorrichtung.

13. Verfahren nach Anspruch 11, des Weiteren umfassend ein Wiederholen des Empfangens, Extrahierens und Verarbeitens für jedes der anderen Stücke von Medieninhalt in der Mehrzahl von Stücken von Medieninhalt.

14. System, umfassend:
eine Server-Vorrichtung (504), die ausgelegt ist zum:
Erstellen einer RTCP-Nachricht (Real-Time Control Protocol RTCP, Echtzeitsteuerprotokoll), die eine Sitzungsbeschreibungsnachricht beinhaltet, wobei die Sitzungsbeschreibungsnachricht eine SDP-Sitzungsbeschreibungsnachricht (Session Description Protocol SDP, Sitzungsbeschreibungsprotokoll) ist und einem aus einer Mehrzahl von Stücken von Medieninhalt in einer Abspielliste (play list) von Medieninhalt zugeordnet ist, der mittels Stream von der Server-Vorrichtung an eine Client-Vorrichtung übertragen wird; und
Senden der RTCP-Nachricht an die Client-Vorrichtung, wobei die RTCP-Nachricht beinhaltet:
einen oder mehrere RTP-Zustandsblöcke (Real-Time Transport Protocol RTP, Echtzeittransportprotokoll), wobei jeder RTP-Zustandsblock RTP-spezifische Information über einen Medienstream eines aus der Mehrzahl von Stücken von Medieninhalt identifiziert;
ein erstes Feld, das Daten enthält zum Identifizieren der RTCP-Nachricht als ein Typ, der die Sitzungsbeschreibungsnachricht einbettet;
ein zweites Feld, das Daten enthält, die die Sitzungsbeschreibungsnachricht sind; und
ein drittes Feld, das Daten enthält zum Identifizieren einer Länge der RTCP-Nachricht, welche durch Summieren einer Länge des einen oder der mehreren RTP-Zustandsblöcke, einer Länge des ersten Feldes, einer Länge des zweiten Feldes und einer Länge des dritten Feldes erzeugt wird; und
eine Client-Vorrichtung (506), die ausgelegt ist zum:
von der Server-Vorrichtung erfolgenden Empfangen der RTCP-Nachricht;
aus der RTCP-Nachricht erfolgenden Extrahieren der Sitzungsbeschreibungsnachricht; und
Verarbeiten des einen aus der Mehrzahl von Stücken von Medieninhalt wenigstens teilweise auf Grundlage der Sitzungsbeschreibungsnachricht.

## Revendications

1. Procédé mis en oeuvre au niveau d'un dispositif, le procédé consistant à :
- créer (356) un message de protocole de commande en temps réel, RTCP, incluant un message de description de session, le message de description de session étant :
- un message de description de session de protocole de description de session, SDP ; et
- associé à une pièce d'une pluralité de pièces de contenu de média dans une liste de lecture de contenus de média diffusés en flux du dispositif à un dispositif client ; et
- expédier (358) le message RTCP au dispositif client, le message RTCP incluant :
- un premier champ contenant des données identifiant le message RTCP comme étant d'un type intégrant le message de description de session ;
- un deuxième champ contenant des données qui sont le message de description de session ; et
- un troisième champ contenant des données identifiant une longueur du message RTCP, générée en faisant la somme d'une longueur du premier champ, d'une longueur du deuxième champ et d'une longueur du troisième champ.

2. Procédé selon la revendication 1, consistant, en outre, à :
- créer un deuxième message RTCP incluant un deuxième message de description de session, le deuxième message de description de session étant associé à une deuxième pièce de la pluralité de pièces de contenu de média dans la liste de lecture ; et
- expédier le deuxième message RTCP au dispositif client.

3. Procédé selon la revendication 1, pour lequel le dispositif comprend un dispositif serveur.

4. Procédé selon la revendication 1, pour lequel le message RTCP est une partie d'un paquet RTCP.

5. Procédé selon la revendication 1, pour lequel le message RTCP comprend en outre :
- un ou plusieurs blocs d'état de protocole de transport en temps réel, RTP, chaque bloc d'état RTP identifiant des informations spécifiques au RTP relatives à un flux de média d'une pièce de la pluralité de pièces de contenu de média ; et
- le troisième champ contenant des données identifiant la longueur du message RTCP, générée en faisant la somme de la longueur du premier champ, de la longueur du deuxième champ, de la longueur du troisième champ et de la longueur de l'un ou plusieurs blocs d'état RTP.

6. Procédé selon la revendication 1, pour lequel le message RTCP comprend en outre :
- un quatrième champ contenant une ou plusieurs données parmi :
- des données identifiant une version du RTP en cours d'utilisation pour diffuser en flux l'une des pièces de contenu de média ;
- des données identifiant si un remplissage (padding) additionnel est inclus dans le message RTCP ;
- des données identifiant si les données du deuxième champ ont été compressées ;
- des données identifiant le message de description de session et une adresse d'un expéditeur du message de description de session ;
- des données identifiant un nombre de blocs d'état de RTP contenus dans le message RTCP ;
- des données identifiant si des données dans un bloc d'état RTP du message RTCP s'appliquent à tous les paquets RTP ayant un ID de flot de SDP (SDP Flow ID) particulier ou uniquement à des paquets de RTP ayant un numéro de type de charge utile RTP (RTP Payload Type number) particulier ;
- des données identifiant un numéro de type de charge utile RTP pour un bloc d'état RTP du message RTCP ;
- des données identifiant un flux de média de l'une de la pluralité de pièces de contenu de média à laquelle un bloc d'état RTP du message RTCP se réfère ;
- des données identifiant une source d'un flux de média de l'une de la pluralité de pièces de contenu de média à laquelle un bloc d'état RTP du message RTCP se réfère ;
- des données identifiant une valeur d'un champ d'estampille temporelle RTP qu'un paquet RTP pour un flux de média de l'une de la pluralité de pièces de contenu de média aurait si le paquet RTP avait été expédié au début du flux de média ; et
- des données identifiant une valeur d'un champ de numéro de séquence RTP d'un premier paquet RTP expédié pour un flux de média de l'une de la pluralité de pièces de contenu de média ; et
- le troisième champ contenant des données identifiant la longueur du message RTCP, générée en faisant la somme de la longueur du premier champ, de la longueur du deuxième champ, de la longueur du troisième champ et d'une longueur du quatrième champ.

7. Procédé selon la revendication 6, pour lequel les données identifiant le message de description de session et l'adresse de l'expéditeur du message de description de session incluent une somme de vérification calculée au regard du message de description de session et de l'adresse de l'expéditeur du message de description de session.

8. Procédé selon la revendication 6, pour lequel les données identifiant le nombre de blocs d'état RTP contiennent une valeur égale à zéro afin d'indiquer qu'aucun bloc d'état RTP n'est contenu dans le message RTCP.

9. Procédé selon la revendication 1, pour lequel le message RTCP comprend en outre :
- un quatrième champ contenant des données indiquant que le message RTCP contient un fragment du message de description de session ;
- un cinquième champ contenant des données identifiant le fragment ; et
- le troisième champ contenant des données identifiant la longueur du message RTCP, générée en faisant la somme de la longueur du premier champ, de la longueur du deuxième champ, de la longueur du troisième champ, d'une longueur du quatrième champ et d'une longueur du cinquième champ.

10. Procédé selon la revendication 1, pour lequel le message RTCP comprend en outre :
- un quatrième champ contenant des données identifiant une version du RTP en cours d'utilisation pour diffuser en flux l'une de la pluralité de pièces de contenu de média ;
- un cinquième champ contenant des données identifiant si un remplissage additionnel est inclus dans le message RTCP ; et
- le troisième champ contenant des données identifiant la longueur du message RTCP, générée en faisant la somme de la longueur du premier champ, de la longueur du deuxième champ, de la longueur du troisième champ, d'une longueur du quatrième champ et d'une longueur du cinquième champ.

11. Procédé mis en oeuvre au niveau d'un dispositif, le procédé consistant à :
- recevoir (382), d'une source de contenu de média, un message de protocole de commande en temps réel, RTCP ;
- extraire (384), du message RTCP, un message de description de session associé à une pièce d'une pluralité de pièces de contenu de média dans une liste de lecture de contenus de média diffusés en flux de la source de contenu de média au dispositif, le message de description de session étant un message de description de session de protocole de description de session, SDP, et le message RTCP incluant :
- un premier champ contenant des données identifiant le message RTCP comme étant d'un type intégrant le message de description de session SDP ;
- un deuxième champ contenant des données qui sont le message de description de session SDP ; et
- un troisième champ contenant des données identifiant une longueur du message RTCP, générée en faisant la somme d'une longueur du premier champ, d'une longueur du deuxième champ et d'une longueur du troisième champ ; et
- traiter (386) l'une de la pluralité de pièces de contenu de média en se basant au moins en partie sur le message de description de session.

12. Procédé selon la revendication 11, comprenant, en outre, de reproduire l'une de la pluralité de pièces de contenu de média au niveau du dispositif.

13. Procédé selon la revendication 11, comprenant, en outre, de répéter la réception, l'extraction et le traitement pour chacune des autres pièces de contenu de média de la pluralité de pièces de contenu de média.

14. Système comprenant :
- un dispositif serveur (504) configuré pour :
- créer un message de protocole de commande en temps réel, RTCP, incluant un message de description de session, le message de description de session étant un message de description de session de protocole de description de session, SDP, et étant associé à une pièce d'une pluralité de pièces de contenu de média dans une liste de lecture de contenus de média diffusés en flux du dispositif serveur à un dispositif client ; et
- expédier le message RTCP au dispositif client, le message RTCP incluant :
- un ou plusieurs blocs d'état de protocole de transport en temps réel, RTP, chaque bloc d'état RTP identifiant des informations spécifiques au RTP sur un flux de média d'une pièce de la pluralité de pièces de contenu de média ;
- un premier champ contenant des données identifiant le message RTCP comme étant d'un type intégrant le message de description de session ;
- un deuxième champ contenant des données qui sont le message de description de session ; et
- un troisième champ contenant des données identifiant une longueur du message RTCP, générée en faisant la somme d'une longueur de l'un ou plusieurs blocs d'état RTP, d'une longueur du premier champ, d'une longueur du deuxième champ et d'une longueur du troisième champ ; et
- un dispositif client (506) configuré pour :
- recevoir, du dispositif serveur, le message RTCP ;
- extraire, du message RTCP, le message de description de session ; et
- traiter l'une de la pluralité de pièces de contenu de média en se basant au moins en partie sur le message de description de session.
